(19) **Europäisches Patentamt**

**European Patent Office**

**Office européen des brevets**

(11) **EP 0 670 789 B1**

(12) **EUROPÄISCHE PATENTSCHRIFT**

(45) Veröffentlichungstag und Bekanntmachung des Hinweises auf die Patenterteilung:
**10.06.1998 Patentblatt 1998/24**

(51) Int. Cl.$^6$: **B60K 41/10**

(21) Anmeldenummer: **94928265.1**

(22) Anmeldetag: **28.09.1994**

(86) Internationale Anmeldenummer:
**PCT/DE94/01138**

(87) Internationale Veröffentlichungsnummer:
**WO 95/09741 (13.04.1995 Gazette 1995/16)**

(54) **VERFAHREN ZUR STEUERUNG DES ABTRIEBSMOMENTS EINES AUTOMATISCHEN SCHALTGETRIEBES**

METHOD OF CONTROLLING THE OUTPUT TORQUE OF AN AUTOMATIC TRANSMISSION

PROCEDE PERMETTANT DE MODULER LE COUPLE DE SORTIE D'UNE BOITE DE VITESSES AUTOMATIQUE

(84) Benannte Vertragsstaaten:
**DE FR GB SE**

(30) Priorität: **05.10.1993 DE 4333899**

(43) Veröffentlichungstag der Anmeldung:
**13.09.1995 Patentblatt 1995/37**

(73) Patentinhaber: **ROBERT BOSCH GMBH**
**70442 Stuttgart (DE)**

(72) Erfinder: **ZHANG, Hong**
**D-71701 Schwieberdingen (DE)**

(56) Entgegenhaltungen:
**EP-A- 0 234 685          EP-A- 0 482 689**
**EP-A- 0 616 919          DE-A- 4 204 401**
**DE-A- 4 309 903          US-A- 4 724 723**
**US-A- 4 891 759**

**EP 0 670 789 B1**

**Beschreibung**

Stand der Technik

Die Erfindung geht aus von einem Verfahren bzw. einer Vorrichtung nach dem Oberbegriff des Anspruchs 1 oder 2 bzw. Anspruchs 14 oder 15.

Aus den Patentanmeldungen DE-OS 40 37 237 und DE-OS 41 25 574 ist bekannt, das Abtriebsmoment bei einem automatischen Getriebe durch gezielte Motormomentsteuerung vor und nach einem Schaltvorgang des Automatikgetriebes auf gleicher Höhe zu halten, sofern sich der Fahrerwunsch während der Schaltung nicht ändert. Die in dieser Anmeldung verwendeten Begriffe "Abtriebsmoment" und "Abtriebsdrehmoment" beinhalten das Getriebeausgangsmoment. Das Abtriebsmoment und damit die Zugkraft an den Antriebsrädern wird so gesteuert, daß es in weiten Grenzen unabhängig vom gerade eingelegten Gang oder dem Zustand der Wandler-Überbrückungskupplung ist. Dieses Verfahren ist unter dem Namen "Mastershift" bekannt. Mit Hilfe dieser bekannten Steuerfunktion können die Schaltpunkte des Automatikgetriebes in verbrauchsoptimale Bereiche gelegt werden, ohne daß dabei Einbußen bezüglich der Sportlichkeit und der Zugkraftdosierbarkeit in Kauf genommen werden müssen. Die bekannte Steuerfunktion bezieht sich jedoch lediglich auf die Steuerung des Abtriebsmoments außerhalb der Schaltvorgänge.

In der DE-Patentanmeldung P 42 39 711.1 wird ein Verfahren und eine Vorrichtung zur Steuerung eines Fahrzeugs beschrieben, bei dem zwischen verschiedenen Teilsystemen, von denen eines ein Motorsteuersystem ist, zu dem Motorsteuersystem hin eine Schnittstelle definiert, welche auf der Basis des von Motor erzeugten Moments arbeitet und über die die Teilsysteme Informationen betreffend dieses Moments zur Steuerung des Fahrzeugs austauschen.

In der DE-OS 42 04 401 wird beschrieben, wie die Kupplungen des Automatikgetriebes und das Moment des Fahrzeugmotors zu steuern sind, damit das Abtriebsmoment nach dem Schaltvorgang in etwa dem vor dem Schaltvorgang anliegenden ist. Hierzu sind verschiedene Steuerungsabläufe vorgesehen, je nach dem, ob es sich um ein Hoch- oder um einen Rückschaltvorgang handelt. Wesentlich ist dabei, daß die beschriebenen Steuerungsabläufe zur Konstanthaltung des Abtriebsmoments bei Schaltvorgängen nur dann gelten, wenn sich das Fahrzeug in einem Betriebszustand mit einem positiven Kupplungsmoment befindet. Solch ein Betriebszustand mit positivem Kupplungsmoment liegt im sogenannten Motorzugbetrieb vor, d. h., daß das Fahrzeug aufgrund des Motormoments angetrieben wird.

Weiterhin ist bekannt, daß neben dem obengenannten Motorzugbetrieb auch Betriebszustände mit einem negativen Kupplungsmoment bei einem Kraftfahrzeug vorliegen können. Bei solchen Motorschiebebetriebszuständen wird der Motor durch die Fahrzeugräder angetrieben. Der Motor liefert dabei ein Motorschleppmoment.

Die US 4,724,723 zeigt eine Steuerung des Abtriebsmomentes während Schaltvorgängen, wobei unterschiedliche Steuerungsabläufe abhängig davon ausgewählt werden, ob es sich um einen Hoch- oder Rückschaltvorgang oder ob es sich um einen Schiebebetrieb oder Zugbetrieb handelt.

Die nicht vorveröffentlichte EP 0 616 919 A2 offenbart eine Steuerung des Abtriebsmomentes während Schaltvorgängen, wobei die Steuerungsabläufe unter anderem abhängig von dem durch Auswertung des Wandlerschlupfes ermittelten Turbinenmoment Tt gewählt werden.

Die Aufgabe der vorliegenden Erfindung besteht darin, eine optimale Steuerung des Abtriebsmoments bei Schaltproblemen eines automatischen Schaltgetriebes in allen Betriebszuständen zu gewährleisten.

Vorteile der Erfindung

Die Erfindung geht aus von einer Steuerung des Abtriebsmoments eines automatischen Schaltgetriebes während des Ablaufs eines Schaltvorgangs. Das Automatikgetriebe weist dabei wenigstens zwei über Kupplungen alternativ einlegbare Getriebegänge auf, wobei zur Steuerung des Abtriebsmoments die Kupplungen und das Moment des Fahrzeugmotors gemäß wenigstens zweier abhängig von momentan vorliegenden Schaltbedingungen auswählbare Steuerungsabläufe gesteuert werden. Zur Auswahl der Steuerungsabläufe als Schaltbedingung wird ermittelt, ob sich das Fahrzeug in einem Betriebszustand mit einem positiven Kupplungsmoment (Motorzugbetrieb) oder in einem Betriebszustand mit einem negativen Kupplungsmoment (Motorschiebebetrieb) befindet.

Die Bestimmung des positiven oder negativen Kupplungsmoments kann beispielsweise derart geschehen, daß aus der Motordrehzahl und der Motorlast unter Berücksichtigung des Zündwinkels und gegebenfalls getätigter Zylinderausblendungen ein indiziertes Ist-Motormoment abgeschätzt wird. Das Motorschleppmoment kann aus der Motorlast, der Motordrehzahl und der Motortemperatur abgeschätzt werden. Der gesamte Momentenverlust ergibt sich aus dem abgeschätzten Motorschleppmoment und dem Momentenbedarf der Nebenaggregate (z.B. Klima-Anlage). Aus der Differenz zwischen dem indizierten Ist-Motormoment und dem gesamten Momentenverlust ergibt sich das momentane Kupplungsmoment.

Eine andere Methode, das positive oder negative Kupplungsmoment zu bestimmen besteht darin, es mit einem Drehmomentsensor an der Antriebswelle des Fahrzeugs zu messen.

Die oben erwähnte DE-OS 42 04 401 hat die Steuerung des Abtriebsmoments während eines laufenden Schaltvorgangs beim Motorzugbetrieb zum Gegenstand. Für den Fall eines Motorschiebebetriebs, also dann, wenn ein negatives Kupplungsmoment auftritt, ist die in dieser Anmeldung beschriebene Steuerung nicht geeignet, das Abtriebsmoment während des Schaltvorgangs zu steuern. Der Vorteil der Erfindung besteht nun darin, daß eine Steuerung des Abtriebsmoments auch im Falle eines negativen Kupplungsmoments (Motorschiebebetrieb) geliefert wird, und je nach dem, ob sich das Fahrzeug in dem Betriebszustand mit positivem Kupplungsmoment oder in dem Betriebszustand mit negativem Kupplungsmoment befindet, der entsprechende Steuerungsablauf gewählt wird. So ist eine optimale Steuerung des Abtriebsmoments in allen Betriebszuständen des Fahrzeugs gewährleistet.

Insbesondere ist vorgesehen, das Abtriebsmoment während des Schaltvorgangs im wesentlichen konstant zu halten. Bei Vorliegen spezieller Betriebsbedingungen vor bzw. nach einem Schaltvorgang kann zwar das Abtriebsmoment nicht konstant gehalten werden, durch die erfindungsgemäße Steuerung wird jedoch ein ruckfreier und sanfter Übergang zwischen den verschiedenen Abtriebsmomenten ermöglicht.

In einer Ausgestaltung der Erfindung ist vorgesehen, daß im Falle des Vorliegens des Betriebszustands mit negativem Kupplungsmoment (Motorschiebebetrieb) als zusätzliche Schaltbedingung ermittelt wird, ob ein nach Beendigung des Schaltvorgangs gewünschtes Motormoment größer ist als das minimal aufzubringende Motormoment. Abhängig von dieser zusätzlichen Schaltbedingung wird unter den Steuerungsabläufen, die den Betriebszuständen mit negativem Kupplungsmoment zugeordnet sind, die für den jeweiligen Betriebszustand optimale Steuerungsstrategie ausgewählt. Hierdurch gelangt man noch besser zu einem dem jeweiligen Betriebszustand angepaßten Steuerungsablauf. Bei Betriebszuständen mit negativem Kupplungsmoment ist es möglich, daß der Motor vor bzw. nach dem Schaltvorgang mit seinem minimal aufzubringenden Moment arbeitet oder ein Moment aufweist, das größer als das minimal aufzubringende Moment ist. Im ersten Fall ist im allgemeinen vor oder nach dem Schaltvorgang eine Kraftstoffzufuhrabschaltung in Kraft (Schubabschaltung), während im anderen Fall die Kraftstoffzumessung aufrecht erhalten wird. Betrachtet man diese unterschiedlichen Gegebenheiten bei der Auswahl der Steuerungsabläufe, so gelangt man zu noch besser dem jeweiligen Betriebszustand angepaßten Abläufen.

Weiterhin kann vorgesehen sein, daß das nach Beendigung des Schaltprogramms gewünschte Motormoment durch ein vom Fahrer des Fahrzeugs betätigbares Fahrpedal am Anfang des Schaltprogramms vorgegeben wird. Bei dem obengenannten sogenannten Mastershift-Verfahren gibt der Fahrer durch das Fahrpedal ein von ihm gewünschtes Vortriebsmoment bzw. Getriebeabtriebsmoment vor. Außerhalb von Schaltvorgängen kann dieses vom Fahrer gewünschte Vortriebsmoment über die bekannte Getriebeübersetzung und gegebenenfalls unter Berücksichtigung des Wandlerschlupfes in ein gewünschtes Motormoment umgerechnet werden. Zieht man nun in Betracht, daß sich während der im allgemeinen sehr kurzen Schaltzeiten bei Automatikgetrieben der Fahrerwunsch bezüglich des Vortriebsmoments im allgemeinen nicht wesentlich ändert, so kann man mit hinreichender Genauigkeit das nach der Beendigung des Schaltvorgangs gewünschte Motormoment durch das vom Fahrer vorgegebene Vortriebsmoment am Anfang des Schaltvorgangs ermitteln. Dies hat den Vorteil, daß während des Schaltvorgangs das vom Fahrer gewünschte Vortriebsmoment nicht dauernd beobachtet bzw. gemessen und nachgeführt werden muß.

Weiterhin ist es vorteilhaft, als weitere Schaltbedingungen zu ermitteln, ob es sich bei dem zu steuernden Schaltvorgang um einen Hochschaltvorgang von einer ersten Getriebeübersetzung zu einer zweiten Getriebeübersetzung oder um einen Rückschaltvorgang von einer zweiten Getriebeübersetzung zu einer ersten Getriebeübersetzung handelt.

In einer anderen Ausgestaltung der Erfindung wird als zusätzliches weiteres Schaltkriterium ermittelt, ob bei Beginn des Schaltvorgangs das momentane Motormoment größer ist als das minimal aufzubringende Motormoment. Abhängig von dieser zusätzlichen Schaltbedingung können die Steuerungsabläufe gewählt werden. Auch in dieser vorteilhaften Ausgestaltung der Erfindung ist der Gegebenheit Rechnung getragen, daß bei Betriebszuständen mit negativem Kupplungsmoment bei Beginn des Schaltvorgangs entweder der Motor sein minimal aufzubringendes Motormoment aufweist oder ein Moment besitzt, das größer als das Minimalmoment ist.

Vorteilhaft ist es weiterhin, daß

- ein erster Steuerungsablauf gewählt wird, falls
- ein Hochschaltvorgang von einer ersten Getriebeübersetzung zu einer zweiten Getriebeübersetzung erkannt wird und
- das nach Beendigung des Schaltvorgangs gewünschte Motormoment größer als das minimal aufzubringende Motormoment oder gleich dem minimal aufzubringenden Motormoment ist, und/oder
- ein zweiter Steuerungsablauf gewählt wird, falls
- ein Hochschaltvorgang von einer ersten Getriebeübersetzung zu einer zweiten Getriebeübersetzung erkannt wird und
- das nach Beendigung des Schaltvorgangs gewünschte Motormoment kleiner als das minimal aufzubringende Motormoment ist, und/oder
- ein dritter Steuerungsablauf gewählt wird, falls
- ein Rückschaltvorgang von einer zweiten Getriebeübersetzung zu einer ersten Getriebeübersetzung erkannt wird und

- das bei Beginn des Schaltvorgangs vorliegende Motormoment gleich dem minimal aufzubringenden Motormoment ist und
- das nach Beendigung des Schaltvorgangs gewünschte Motormoment kleiner als das minimal aufzubringende Motormoment ist, und/oder
- ein vierter Steuerungsablauf gewählt wird, falls
- ein Rückschaltvorgang von einer zweiten Getriebeübersetzung zu einer ersten Getriebeübersetzung erkannt wird und
- das bei Beginn des Schaltvorgangs vorliegende Motormoment gleich dem minimal aufzubringenden Motormoment ist und
- das nach Beendigung des Schaltvorgangs gewünschte Motormoment größer als das minimal aufzubringende Motormoment ist, und/oder
- ein fünfter Steuerungsablauf gewählt wird, falls
- ein Rückschaltvorgang von einer zweiten Getriebeübersetzung zu einer ersten Getriebeübersetzung erkannt wird und
- das bei Beginn des Schaltvorgangs vorliegende Motormoment größer als das minimal aufzubringende Motormoment ist.

Weitere vorteilhafte Ausgestaltungen sind den Unteransprüchen zu entnehmen.

Zeichnung

In den Figuren 1 bis 9 wird die Erfindung anhand von Ausführungsbeispielen beschrieben.

Die Figur 1 zeigt dabei schematisch ein Blockschaltbild, die Figuren 2 und 3 zeigen Ablaufdiagramme, und die Figuren 4 - 9 stellen Momenten-, Druck- und Drehzahlverläufe dar.

Ausführungsbeispiel

Anhand der im folgenden beschriebenen Ausführungsbeispiele soll die Erfindung näher erläutert werden.

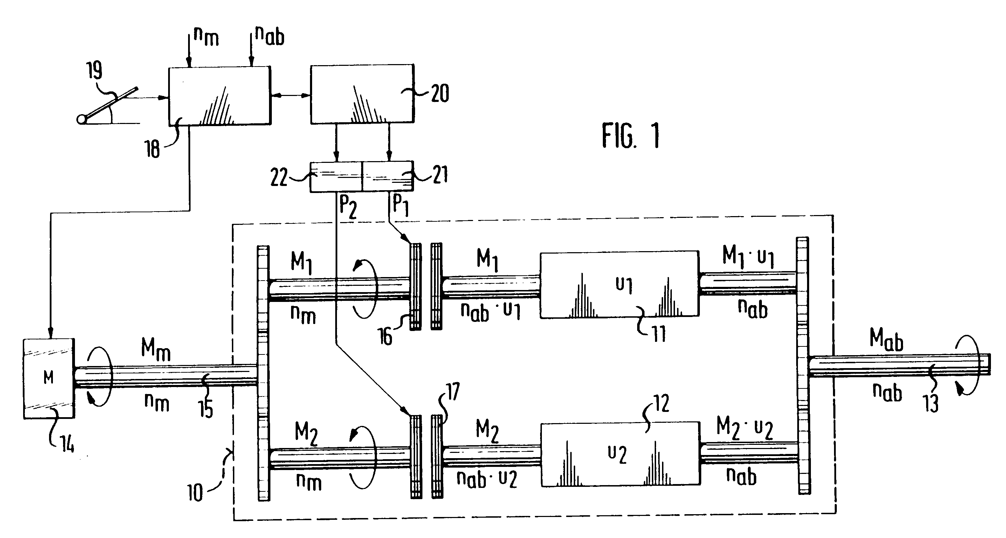

In der Figur 1 ist ein automatisches Stufengetriebe 10 schematisch dargestellt. Es weist zwei Getriebegänge bzw. Schaltstufen auf, die im folgenden als erster Gang 11 und zweiter Gang 12 bezeichnet werden. Das Übersetzungsverhältnis des ersten Gangs 11 ist $u_1$, das des zweiten Gangs 12 ist $u_2$. Die zur Erzielung derartiger Übersetzungsverhältnisse erforderlichen Zahnräder und ihr Ineinandergreifen sind zur Vereinfachung als rechteckiger Block dargestellt. Die beiden Gänge 11 und 12 sind zu einer gemeinsamen Abtriebswelle 13 zusammengeführt, über die die Räder des Fahrzeugs gegebenenfalls über Differentialgetriebe in nicht dargestellter Weise angetrieben werden. Das Abtriebsmoment beträgt $M_{ab}$ und die Abtriebsdrehzahl $n_{ab}$. Angetrieben wird das Stufengetriebe 10 von einem Motor 14 über eine Antriebswelle 15. Der Motor 14 überträgt dabei das Motormoment $M_m$ und die Motordrehzahl $n_m$ auf das Stufengetriebe 10. Bei diesem Motor handelt es sich im allgemeinen um eine Brennkraftmaschine wie einen Ottomotor oder einen Dieselmotor, es kann sich prinzipiell jedoch auch um einen Elektromotor handeln. Die Antriebswelle 15 ist über zwei Kupplungen 16 und 17 mit den beiden Gängen 11 und 12 verbunden. Zur besseren Übersichtlichkeit ist in diesem Ausführungsbeispiel lediglich ein Zwei-Wellen-Getriebe dargestellt, jedoch ist selbstverständlich auch eine Realisierung mit einer größeren Wellenzahl oder als Planetengetriebe möglich.

Zwischen dem Motor 14 und dem Automatikgetriebe 10 ist im allgemeinen ein in der Figur 1 nicht dargestellter Wandler geschaltet. Dieser Wandler kann bei den meisten Systemen durch eine Kupplung überbrückt werden. Die folgenden Beschreibungen gelten für Schaltvorgänge, bei denen diese Wandlerkupplung geschlossen ist. Finden die Schaltvorgänge bei offener Wandlerkupplung statt, so tritt anstelle des Motormoments das Turbinenmoment und anstelle der Motordrehzahl die Turbinendrehzahl. Wenn im folgenden also die Begriffe "Motormoment" und "Motordrehzahl" verwendet werden, so soll darunter auch das Turbinenmoment bzw. die Turbinendrehzahl bei offener Wandlerkupplung verstanden werden.

Zur Steuerung des Motors 14 ist eine elektronische Motorsteuervorrichtung 18 vorgesehen, durch die in an sich bekannter Weise der Motor 14 durch Steuerung oder Regelung der Zündung und/oder der Luft- und/oder Kraftstoffzumessung gesteuert wird. Dies kann anhand vorgegebener Funktion oder Kennfelder erfolgen. Der Fahrerwunsch im Hinblick auf das Abtriebsmoment, die Motorleistung oder die Geschwindigkeit des Fahrzeugs werden über ein vom Fahrer betätigbares Fahrpedal 19 vorgegeben. Weiterhin wird der Motorsteuervorrichtung 18 wenigstens die Motordrehzahl $n_m$ vorgegeben. Die Beeinflussung über weitere Parameter ist hier zur Vereinfachung nicht dargestellt.

Eine elektronische Getriebesteuerungsvorrichtung 20 ist mit der Motorsteuervorrichtung 18 verbunden und steuert zwei Druckregler 21 und 22 zur Erzeugung des Kupplungsdrucks $p_1$ und $p_2$ für die beiden Kupplungen 16 und 17. Die jeweils geschlossene Kupplung gibt den Getriebegang vor, und ein Schaltvorgang wird prinzipiell durch Lösen dieser Kupplung und Schließen einer anderen Kupplung für einen anderen Gang durchgeführt. Dies wird im folgenden noch näher beschrieben.

Zur Vereinfachung sind lediglich zwei Gänge 11 und 12 dargestellt, jedoch kann das automatische Stufengetriebe 10 selbstverständlich auch eine größere Anzahl von Gängen aufweisen. Zur Erläuterung des erfindungsgemäßen Schaltvorgangs ist jedoch die Darstellung von zwei Gängen ausreichend.

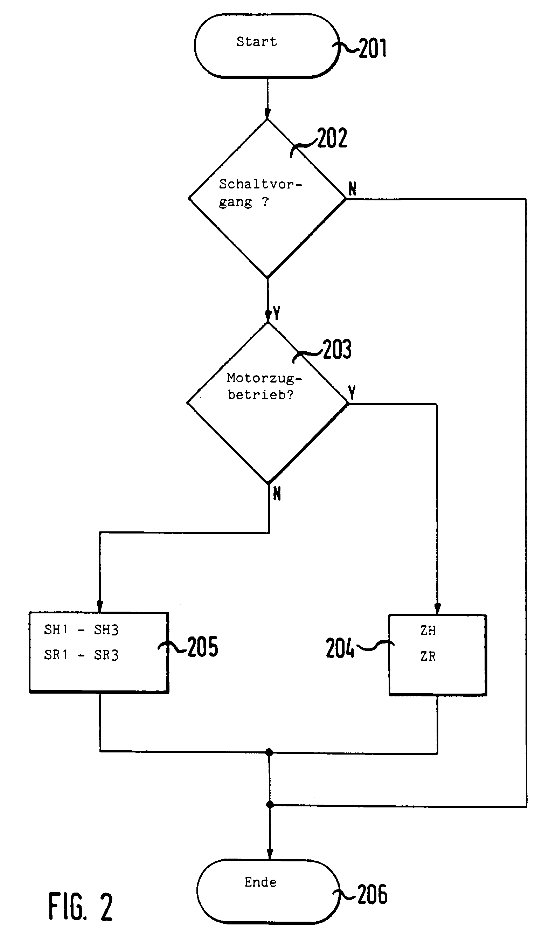

Die Motorsteuervorrichtung 18 und die Getriebesteuervorrichtung 20 sind gewöhnlich als Rechnersteuerungen mit in Kennfeldern abgelegten Steuerdaten ausgebildet. Sie können separat oder als einziger Rechner ausgebildet sein. Das in der Figur 2 zu sehende Ablaufdiagramm stellt den Kern der Erfindung dar. Nach dem Startschritt 201 wird in der Abfrage 202 abgefragt, ob das Getriebe 10 zu schalten ist oder nicht. Die Schaltbedingungen werden dabei im allgemeinen durch an sich bekannte Kriterien bestimmt. So können die Schaltpunkte abhängig von der Motorlast und der Fahrzeuggeschwindigkeit oder abhängig von dem maximalen Motormoment und dem durch den Fahrer vorgegebenen Vortriebswunsch bestimmt werden. Ist kein Schaltvorgang beabsichtigt, so wird im nächsten Schritt direkt das Ende 206 getätigt. Ist jedoch ein Schaltvorgang beabsichtigt, so wird im Schritt 203 ermittelt, ob sich das Fahrzeug im Motorzugbetrieb oder im Motorschiebebetrieb befindet. Befindet sich das Fahrzeug im Motorzugbetrieb, so werden im Schritt 204, je nach dem, ob ein Hoch- oder Rückschaltvorgang gewünscht ist, die Steuerungsabläufe ZH oder ZR ausgewählt. Diese Steuerungsabläufe sind, wie erwähnt, der DE-OS 42 04 401 zu entnehmen. Wird nun ermittelt, daß sich das Fahrzeug in einem Motorschiebebetrieb befindet, so werden in dem Schritt 205 andere Steuerungsabläufe ausgewählt. Nach der Auswahl der Steuerungsabläufe gelangt man zu dem Endschritt 206. Der ganze Zyklus wird während des Betriebs des Fahrzeugs dauernd durchlaufen.

Die Bestimmung, ob ein Motorzugbetrieb vorliegt oder nicht (Schritt 203) geschieht durch die Ermittlung des Kupplungsmoments bei Schaltbeginn. Hierzu wird aus der Motordrehzahl und der Motorlast unter Berücksichtigung des Zündwinkels und gegebenenfalls vorliegender Zylinderausblendungen ein indiziertes Ist-Motormoment movist abgeschätzt. Das Motorschleppmoment mo_schlepp kann aus der Motorlast, der Motordrehzahl und der Motortemperatur abgeschätzt werden. Hierzu sei auch auf die eingangs erwähnte DE-Patentanmeldung P 42 39 711.1 verwiesen. Der gesamte Momentenverlust mo_verl setzt sich aus dem Motorschleppmoment mo_schlepp und dem Momentenbedarf mo_na der Nebenaggregate (z.B. Klima-Anlage) zusammen.

$$mo\_verl = mo\_schlepp + mo\_na$$

Das geschätzte Ist-Kupplungsmoment mo_kup_ist ergibt sich zu

$$mo\_kup\_ist = movist - (mo\_schlepp + mo\_na)$$

Ist beim Schaltbeginn mo_kup_ist < 0, dann ist das Kupplungsmoment negativ und es liegt kein Motorzugbetrieb vor, ist mo_kup_ist > 0, dann ist das Kupplungsmoment positiv und es liegt ein Motorzugbetrieb vor.

Eine andere Methode, das positive oder negative Kupplungsmoment zu bestimmen besteht darin, es mit einem Drehmomentsensor an der Antriebswelle des Fahrzeugs zu messen.

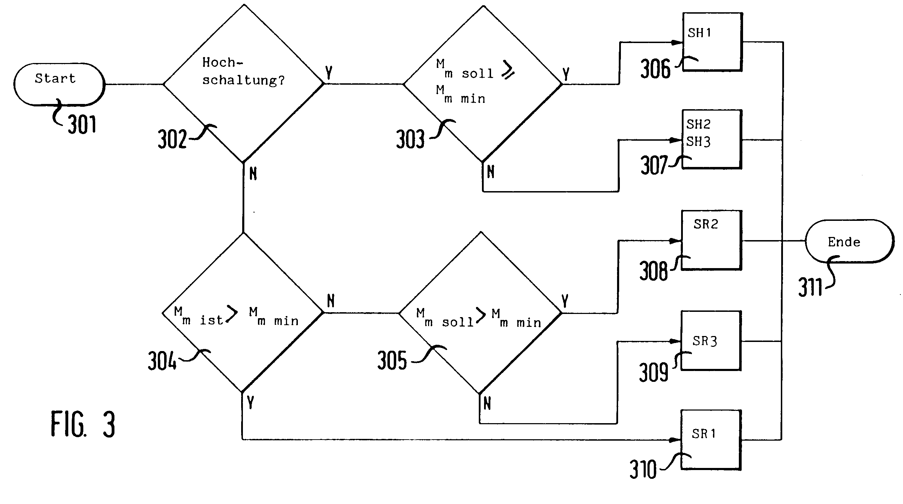

In der Figur 3 wird nun anhand eines Ablaufdiagramms näher erläutert, wie im Falle des Erkennens eines Motorschiebebetriebs (Schritt 203 der Figur 2) in Schritt 205 (Figur 2) die einzelnen Steuerungsabläufe den Schaltbedingungen zugeordnet werden. Nach dem Startschritt 301 wird in einem ersten Schritt 302 abgefragt, ob es sich bei dem beabsichtigten Schaltvorgang um einen Hoch- oder Rückschaltvorgang handelt. Handelt es sich um einen Hochschaltvorgang, so wird im Schritt 303 ermittelt, ob das nach Beendigung des Schaltvorgangs gewünschte Motormoment $M_{m\,soll}$ größer als das minimale Motormoment $M_{m\,min}$ ist. Das nach dem Schaltvorgang gewünschte Motormoment $M_{m\,soll}$ kann aus dem vom Fahrer durch Betätigung des Fahrpedals gewünschten Vortriebsmoment am Schaltanfang und der Getriebeübersetzung des Zielgangs ermittelt werden. Dies wird im Laufe dieses Ausführungsbeispiels noch näher erläutert werden. Wird in dem Schritt 303 festgestellt, daß nach der Schaltung das Motormoment größer ist als das Minimalmotormoment, so wird im Schritt 306 der Steuerablauf SH1 gewählt. Dieser wie auch die im weiteren beschriebenen Steuerungsabläufe werden im weiteren Ausführungsbeispiel näher erläutert werden. Ist das nach der Schaltung gewünschte Motormoment kleiner als das Minimalmotormoment, so wird der Steuerungsablauf SH2 oder SH3 (Schritt 307) gewählt. Handelt es sich bei dem beabsichtigten Schaltvorgang um einen Rückschaltvorgang, so wird im Schritt 304 abgefragt, ob das momentane Motormoment $M_{m\,ist}$ größer als das Minimalmotormoment $M_{m\,min}$ ist. Ist das Motormoment am Beginn des Schaltvorgangs über dem Minimalmotormoment, so wird im Schritt 310 der Steuerungsablauf SR1 ausgewählt. Weist am Schaltanfang das Motormoment bereits seinen Minimalwert auf, d. h., daß beispielsweise am Schaltanfang schon eine Schubabschaltung stattgefunden hat, so wird im Schritt 305 abgefragt, ob das Motormoment nach der Schaltung $M_{m\,soll}$ größer als das Minimalmoment $M_{m\,min}$ des Motors ist. Befindet sich also das Motormoment sowohl am Schaltanfang als auch am Schaltende auf seinem Minimalwert, so wird der Steuerablauf SR3 im Schritt 309 ausgewählt. Weist jedoch das Motormoment zwar am Beginn des Schaltvorgangs seinen Minimalwert auf, übersteigt jedoch nach der Schaltung diesen Minimalwert, so wird im Schritt 208 der Steuerablauf SR2 ausgewählt.

Nach dem Endschritt 311 wird der in der Figur 3 zu sehende Ablauf dann wieder gestartet, wenn bei einem nachfolgenden Schaltvorgang im Schritt 203 (Figur 2) ein Motorschiebebetrieb ermittelt wird.

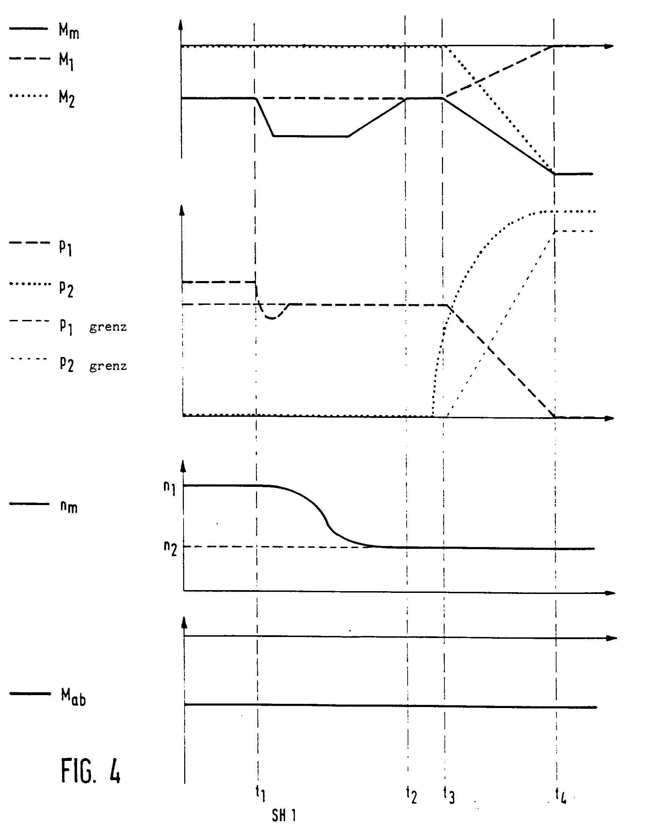

Im folgenden werden nun anhand der Figuren 4 - 9 die einzelnen Steuerabläufe detailliert beschrieben.

a) Hochschaltungen

Fall 1 (Steuerungsablauf SH1):

Die Steuerung SH1 (Schritt 306 in Figur 3) gilt im Motorschiebebetrieb, wenn nach der Schaltung das Motormoment $M_{m \, soll}$ größer als das Minimalmotormoment $M_{m \, min}$ (entspricht dem Motorschleppmoment) ist, d. h.

$$M_{m \, soll} = M_2 = (1/u_2)^* M_{ab} >= M_{m \, min} \tag{1}$$

Wie schon beschrieben, zeigt die Figur 1 das Ersatzschaltbild eines Lastschaltgetriebes mit zwei Gangstufen. Ausgangspunkt ist der angelegte erste Gang, wobei das volle Drehmoment über die ohne Schlupf arbeitende Kupplung 16 übertragen wird. Vor der Schaltung (bis zur Zeit $t_1$ in Fig.4) ist bei einem negativen Abtriebsmomentwunsch $M_{ab}$ ein Motormoment von

$$M_m = M_1 = (1/u_1)^* M_{ab} \tag{2}$$

mit $u_1$ = Übersetzung des ersten Gangs erforderlich.

Für eine Hochschaltung muß in der ersten Phase (ab $t_1$) die erste Kupplung 16 schleifen, und die Motordrehzahl wird durch den schleppenden Motor von der Synchrondrehzahl $n_1$ des ersten Gangs zu der Synchrondrehzahl $n_2$ des zweiten Gangs übergehen. Der Druck in der Kupplung 16, die das Moment $M_1$ überträgt, wird nun auf den Wert:

$$p_1 = p_1(-M_1) \tag{3}$$

abgesenkt. Dies ist der Druck, der erforderlich wäre, um das Moment $M_1$ bei schlupfender Kupplung 16 zu übertragen.

Das Motormoment wird gegenüber der Formel (2) um einen Betrag $deltaM_m$ reduziert

$$M_m = M_1 - deltaM_m \tag{4},$$

mit $deltaM_m$ proportional zu $(n_m - n_2)$ damit die Motordrehzahl durch die Drehzahlregelung von $n_1$ zu $n_2$ schnell und sanft übergeht. Hierzu sei auf die DE-Patentanmeldung P 43 09 903.3 hingewiesen, die eine solche Motordrehzahlregelung während eines Schaltvorgangs zum Gegenstand hat.

Da der Übergang von Haft- in Gleitreibung der Kupplungen jedoch üblicherweise mit einer Hysterese verbunden ist, wird der durch die Gleichung (3) gegebene Wert am Anfang kurzfristig mit einem negativen Wert deltap überlagert.

Dies ist in dem zweiten Diagramm der Figur 4 kurz nach dem Zeitpunkt $t_1$ zu sehen.

Ist die neue Synchrondrehzahl $n_2$ erreicht, so wird die Kupplung 17 durch Einspeisung eines Drucks $p_2$ geschlossen. Da die Kupplung 16 noch das volle Motormoment abnimmt und die Motordrehzahl $n_m$ praktisch gleich der Synchrondrehzahl $n_2$ ist, erfolgt das Einkuppeln praktisch ruckfrei. Die Kupplung 17 soll möglichst schnell in Haftreibung übergehen, d. h. schlupffrei arbeiten. Der Druck $p_2$ muß daher gemäß

$$p_2 > p_{2 \, haft}(-M_2) \tag{5}$$

gewählt werden, wobei in der Anfangsphase $M_2 = 0$ ist. Nun muß die Kupplung 17 das negative Drehmoment übernehmen. Dies geschieht dadurch, daß $M_1$ gemäß einer Funktion

$$M_1(t) = g(t)^*(1/u_1)^* M_{ab} \tag{6}$$

vorgegeben wird, wobei $g(t)$ eine Funktion der Zeit ist, die unmittelbar nach dem Schließen der Kupplung 17 den Wert 1 hat und anschließend stetig bis auf den Wert 0 abfällt, auf dem sie dann verharrt. Daraus ergibt sich gemäß

$$p_1(t) = p_1[-M_1(t)] \tag{7}$$

ein zeitlicher Verlauf von $p_1(t)$, mit dem der Druckregler für die Kupplung 16 beaufschlagt wird.

Das Abtriebsmoment $M_{ab}$ setzt sich aus den Momenten $M_1$ und $M_2$ sowie den entsprechenden Übersetzungs-

stufen gemäß

$$M_{ab} = (M_1{}^*u_1) + (M_2{}^*u_2) \tag{8}$$

zusammen. Außerdem gilt bei als konstant angenommener Motordrehzahl $n_m$ (was wegen der schlupffrei arbeitenden Kupplung 17 und der im Vergleich zu den Schaltvorgängen nur langsam variierenden Abtriebsdrehzahl gerechtfertigt ist) die Momentenbilanz

$$M_m = M_1 + M_2 \tag{9}$$

Im Gleichungssystem (8) und (9) ist $M_1$ gemäß Gleichung (6) definiert. $M_{ab}$ ist durch den Fahrerwunsch vorgegeben. Aus diesem Gleichungssystem lassen sich damit der Sollwert für das Motormoment $M_m$ sowie die sich damit einstellende Reaktionsgröße $M_2$ berechnen:

$$M_m = (1/u_2){}^*M_{ab} + [1-(u_1/u_2)]{}^*M_1 \tag{10}$$

$$M_2 = (1/u_2){}^*M_{ab} - (u_1/u_2){}^*M_1 \tag{11}$$

Der Schaltvorgang ist zur Zeit $t_4$ beendet, wenn $M_1$ auf 0 gestiegen und damit $p_1$ auf 0 abgesunken ist. Der zeitliche Verlauf der Größen $p_1$, $M_1$, $p_2$, $M_2$, $M_m$, $M_{ab}$ und der Motordrehzahl $n_m$ ist in der Figur 4 unter der Annahme eines linearen Zusammenhangs zwischen Druck und Moment in den mit Schlupf behafteten Kupplungen (z. B. $M_1 = -k_1 {}^* p_1$) und unter der Annahme einer linear von 1 nach 0 abnehmenden Funktion g(t) angegeben.

Fall 2 (Steuerungsablauf SH2):

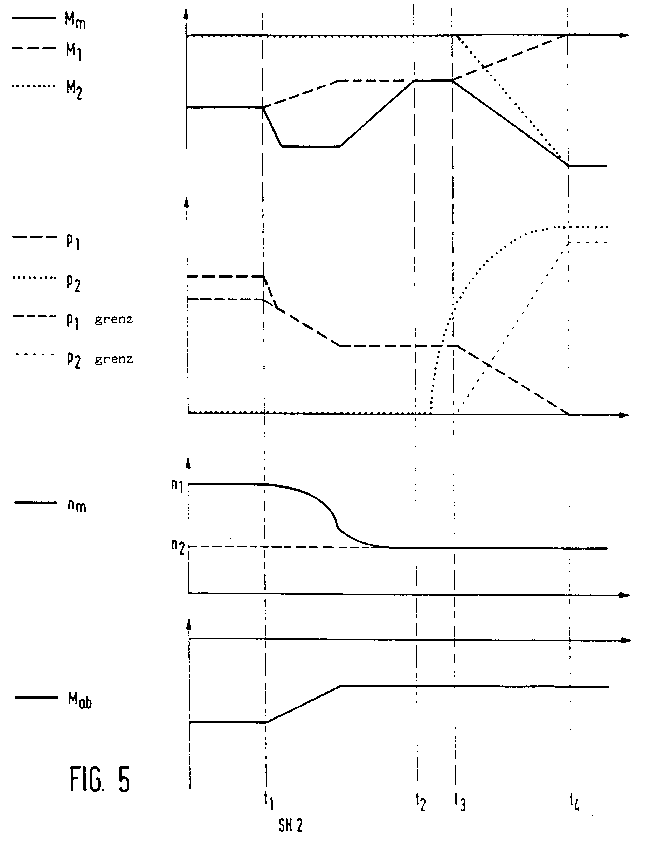

Wenn die Bedingung der Formel (1) nicht mehr gilt, geht der Motor nach dem Schaltvorgang in den Betriebszustand über, in dem das Motormoment gleich dem Minimalmotormoment ist. In diesem Fall und auch in dem Falle, in dem der Motor vor und nach der Schaltung sein Minimalmoment aufweist, kann nicht mehr erreicht werden, daß das Abtriebsmoment während des Schaltvorgangs konstant gehalten wird. Vielmehr wird das Abtriebsmoment nach der Schaltung ansteigen. Das Getriebe muß wie folgt gesteuert werden, damit die Schaltung ruckfrei und das Abtriebsmoment dann von dem Wert vor der Schaltung an den Wert nach der Schaltung anschließt. Dies ist in der Figur 5 zu sehen.

Schon in der ersten Phase ab dem Zeitpunkt $t_1$ wird der Druck in der Kupplung 16 abgesenkt. Dies geschieht dadurch, daß $M_1$ gemäß einer Funktion

$$M_1(t) = g(t){}^*(M_{ab}/u_1) + [1-g(t)]{}^*M_{min}{}^*u_2/u_1 \tag{12}$$

vorgegeben wird, wobei g(t) mit der Zeit von 1 auf 0 abfällt. Daraus ergibt sich gemäß der Gleichung (7) ein zeitlicher Verlauf von $p_1$.

Die Steuerung des Motormoments ist wie in der Gleichung (4) beschrieben mit $M_1$ aus der Gleichung (12). Die Motordrehzahl geht in dieser ersten Phase durch die Senkung von $p_1$ und durch die Reduzierung von $M_m$ über von der Synchrondrehzahl $n_1$ des ersten Gangs zur Synchrondrehzahl $n_2$ des zweiten Gangs. Die weiteren Schritte sind wie im Fall 1 zu wählen.

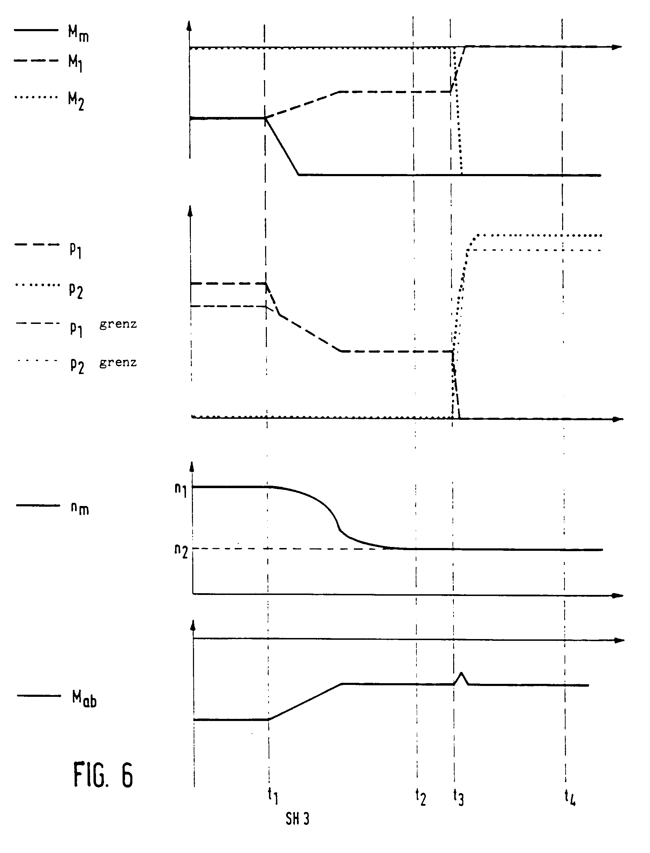

Ein alternativer Steuerungsablauf SH3 ist in der Figur 6 dargestellt. Die Vorgabe von $M_1$ zur Drucksenkung ist identisch wie die in der Gleichung (12) beschriebene. Gleichzeitig wird das Motormoment gemäß

$$M_m = g_1(t){}^*(M_{ab}/u_1) + [1-g_1(t)]{}^*M_{min} \tag{13}$$

auf $M_{m\,min}$ abgesenkt, wobei $g_1(t)$ mit der Zeit von 1 auf 0 abfällt. Die Momentdifferenz zwischen $M_m$ und $M_1(t)$ bewirkt die Reduzierung der Motordrehzahl $n_m$. Das Istabtriebsmoment $M_{ab\,ist}$ steigt in Abhängigkeit von $M_1(t)$ aus Gleichung (12) gemäß

$$M_{ab\,ist} = M_1(t){}^*u_1 \tag{14}$$

Nachdem die Motordrehzahl den Synchronpunkt $n_2$ erreicht hat, wird die Kupplung 16 sofort gelöst. Gleichzeitig wird die Kupplung 17 zugeschaltet. Der Druck $p_2$ muß gemäß der Gleichung (5) mit $M_2 = M_{min}$ gewählt werden, damit die Kupplung 17 in Haftreibung übergeht.

b) Rückschaltung

Fall 1 (Steuerungsablauf SR1):

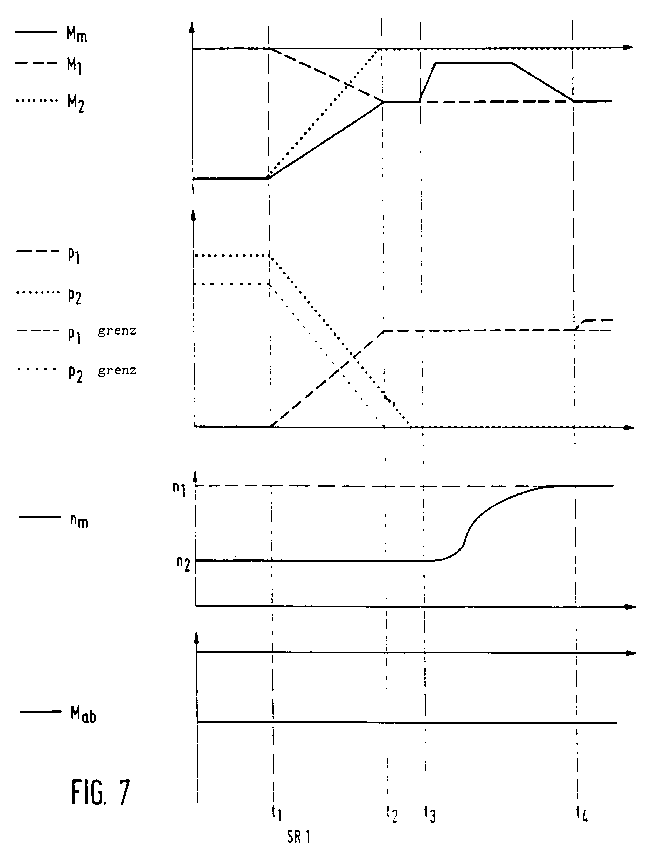

Der Motor ist vor der Schaltung im Schiebebetrieb, jedoch ist das Motormoment $M_{m \text{ ist}}$ vor der Schaltung größer als das Minimalmotormoment (Gleichung (1) gilt). Die Rückschaltung erfolgt dann im wesentlichen durch die Umkehrung des Hochschaltvorgangs. Ausgangssituation in dem in der Figur 7 dargestellten Steuerungsablauf SR1 ist der eingelegte Gang mit der Übersetzung $u_2$ mit geschlossener, schlupffrei arbeitender Kupplung 17 und gelöster Kupplung 16. Für eine Rückschaltung muß nun in einer ersten Phase die Kupplung 16 das Moment von Kupplung 17 übernehmen. Dazu wird in der Kupplung 16 ein Druck aufgebaut, wodurch die Kupplung 17 entsprechend entlastet wird. Die Kupplung 17 arbeitet in dieser Phase aber immer noch ohne Schlupf, d. h. die Kupplung 16 hat einen Schlupf, der der Differenz der beiden Synchrondrehzahlen $n_1$ und $n_2$ entspricht. Nun kann ein Sollmomentenverlauf von $M_1$ durch

$$M_1(t) = f(t) * (M_{ab}/u_1) \tag{15}$$

gewählt werden, wobei $f(t)$ eine Funktion der Zeit ist, die zum Zeitpunkt des Schaltbeginns den Wert 0 hat, dann stetig bis zum Wert 1 ansteigt und anschließend bei 1 verharrt. Der Druck in der Kupplung 16, die das Moment $M_1$ überträgt, wird nach der Gleichung (7) eingestellt. Der Sollwert des Motormoments läßt sich aus der Gleichung (10) berechnen, wobei $M_1$ aus der Gleichung (15) zu entnehmen ist. Die Kupplung 17 arbeitet ohne Schlupf. Der Druck an der Kupplung 17 muß daher mindestens auf ein Mindestniveau gemäß der Gleichung (5) gehalten werden, wobei $M_2$ gemäß der Gleichung (11) berechnet wird.

Sobald die Funktion $f(t)$ den Wert 1 erreicht hat, ist nach den Gleichungen (15) und (11) $M_2 = 0$. Nun kann die Kupplung 17 ruckfrei gelöst werden. Damit der Lösungsvorgang schnell abläuft, kann der Druck $p_2$ während der Aufbauphase von $p_1$ gemäß der Gleichung (5) so weit heruntergefahren werden, daß die Kupplung 17 nur knapp über der Haftgrenze arbeitet. Sobald die Kupplung 17 gelöst ist, beginnt die Phase 2, in der der Schlupf von Kupplung 16 abgebaut werden muß.

Der Sollwert von $M_1$ und damit gemäß Gleichung (7) auch von $p_1$ wird weiterhin nach Gleichung (15) bestimmt. Nach Gleichung (9) ergäbe sich damit ein Sollwert für das Motormoment $M_m$ gemäß Gleichung (2).

Um den Schlupf in der Kupplung 16 abzubauen, muß das Motormoment nun um einen Betrag $deltaM_m$ erhöht werden

$$M_m = M_1 + deltaM_m = (1/u_1)*M_{ab} + deltaM_m \tag{16}$$

wobei $deltaM_m$ eine Funktion von $(n_1 - n_m)$ ist, damit die Motordrehzahl durch eine Drehzahlregelung von $n_2$ zu $n_1$ schnell und sanft übergeht. Auch hierzu sei wiederum auf die DE-Patentanmeldung P 43 09 903.3 verwiesen. Wenn die Motordrehzahl auf den Wert von $n_1$ gestiegen ist, kann die Schaltung zur Zeit $t_4$ als beendet angesehen werden, der Druck $p_1$ wird nun um einen Sicherheitszuschlag $deltap$ erhöht, um ein Durchrutschen der Kupplung 16 sicher zu verhindern. Der zeitliche Verlauf der Größen $p_1$, $M_1$, $p_2$, $M_2$, $M_m$, $M_{ab}$ und der Motordrehzahl $n_m$ ist in der Figur 7 unter der Annahme eines linearen Zusammenhangs zwischen dem Druck und dem Moment in den mit Schlupf behafteten Kupplungen (z. B. $M_1 = -k_1 * p_1$) und unter der Annahme einer linear von 0 nach 1 zunehmenden Funktion $f(t)$ angegeben.

Fall 2 (Steuerungsablauf SR2):

Das Motormoment $M_m$ befindet sich vor der Schaltung auf seinem Minimalwert, ist aber nach der Schaltung über dem Minimalwert, d. h.

$$M_m = M_2 = M_{min} \text{ vor der Schaltung} \tag{17a}$$

$$M_m = M_1 = M_{ab}/u_1 > M_{min} \text{ nach der Schaltung} \tag{17b}$$

In diesem Fall kann das Abtriebsmoment vor und nach der Schaltung nicht konstant gehalten werden. Um dennoch eine ruckfreie und sanfte Schaltung zu erzielen, wird die Steuerung wie folgt durchgeführt:

Die erste Phase ist ähnlich wie im Fall 1 (SR1). Ein Sollmomentverlauf für $M_1$ wird wie im Fall 1 gemäß der Gleichung (15) gewählt. Der Druck in der Kupplung 16, die das Moment $M_1$ überträgt, wird auch wie im Fall 1 nach der Gleichung (7) eingestellt. Der Sollverlauf des Motormoments wird (anders als im Fall 1) gemäß

$$M_m = M_1(t) + [1-f(t)] * M_{min} \tag{18}$$
$$= f(t) * M_{ab}/u_1 + [1-f(t)] * M_{min}$$

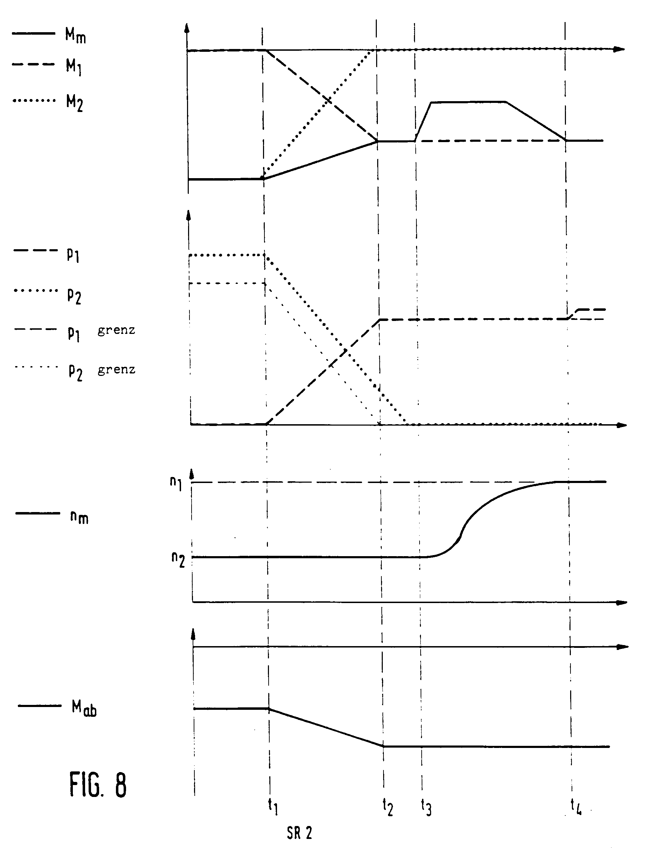

berechnet, wobei f(t) wie in Gleichung (15) eine Funktion der Zeit ist, die zum Zeitpunkt des Schaltbeginns den Wert 0 hat, dann stetig bis zum Wert 1 ansteigt und anschließend bei 1 verharrt. Das Drehmoment in der Kupplung 17 läßt sich aus der Gleichung (9) durch Einsetzen von $M_1(t)$ und $M_m$ bestimmen. Die weiteren Schritte sind identisch mit dem Fall 1. Die zeitlichen Verläufe des Steuerungsablaufs SR2 sind der Figur 8 zu entnehmen.

Fall 3 (SR3):

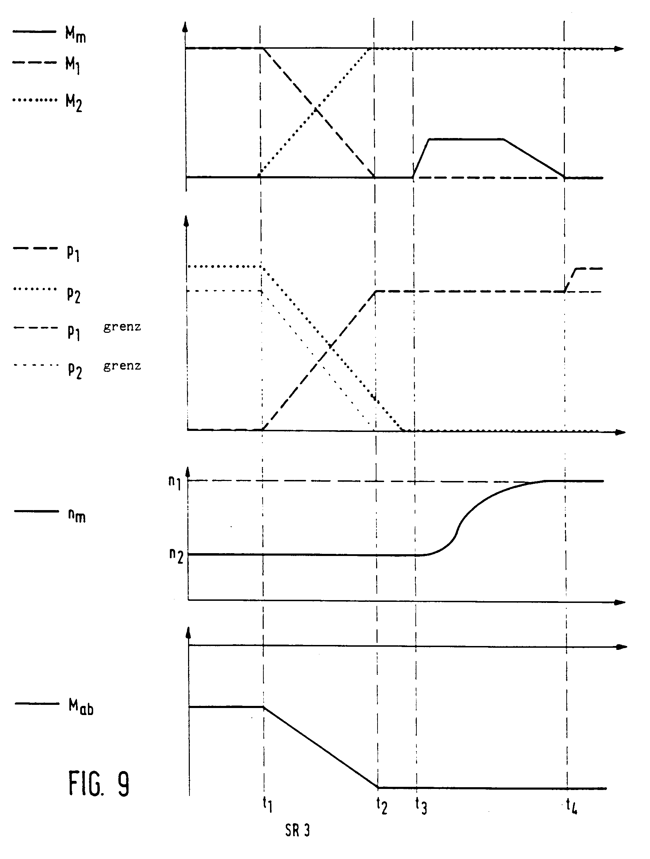

Im Falle, daß das Motormoment $M_m$ vor und nach der Rückschaltung bei seinem Minimalwert $M_{m\,min}$ bleibt, muß auf eine Konstanthaltung des Abtriebsmoments verzichtet werden. In diesem Falle wird das Abtriebsmoment nach der Schaltung abnehmen. Die Steuerung ist ähnlich wie im oben beschriebenen Fall 1. Der Sollverlauf des Motormoments bleibt (anders als im Fall 1 und 2) in der ersten Phase konstant (siehe Figur 9):

$$M_m = M_{min} \tag{19}$$

Die Vorgabe von $M_1$ für den Druck $p_1$ in der Kupplung 16 ist (anders als in Gleichung (15)) gemäß

$$M_1(t) = f(t) * M_{min} \tag{20}$$

damit die Schaltung ruckfrei und das Abtriebsmoment sanft von dem Wert vor der Schaltung an den Wert nach der Schaltung anschließt. Der Druck in der Kupplung 16, die das Moment $M_1$ überträgt, wird auch wie im Fall 1 (SR1) nach Gleichung (7) eingestellt. Das Moment in der Kupplung 17 läßt sich aus der Gleichung (9) durch Einsetzen von $M_m$ aus der Gleichung (19) und von $M_1$ aus der Gleichung (20) bestimmen. Das weitere Vorgehen in der Phase 1 ist identisch mit dem beschriebenen Fall 1. Die zweite Phase ist bei diesem Steuerungsablauf auch identisch mit dem Fall 1. Der Abbau des Schlupfes (Erhöhung der Motordrehzahl) durch eine Motormomenterhöhung wird gemäß der Gleichung (16) durchgeführt mit $M_1 = M_{min}$, wobei die Schubabschaltung bis zum Erreichen der Synchrondrehzahl $n_1$ verboten wird. Nachdem der Schaltvorgang beendet ist, wird die Kraftstoffschubabschaltung wieder erlaubt.

Das Prinzip der obengenannten Steuerungen für Hoch- bzw. Rückschaltungen im Motorschiebebetrieb gilt auch für konventionelle Schaltungen, bei denen die Drosselklappe und damit das Motormoment direkt durch das Fahrpedal eingestellt wird. In diesem Falle braucht nur der Anfangs- bzw. Endwert für $M_1$, $M_2$ und $M_m$ durch das vom Fahrpedal eingestellte Motormoment vor bzw. nach der Schaltung ersetzt zu werden.

Insbesondere ist die erfindungsgemäße Steuerung des Abtriebsmoments während eines laufenden Schaltvorgangs auf einen vom Fahrer vorgegebenen negativen Abtriebsmomentwunsch bei Fahrzeugen mit automatischem Lastschaltgetriebe und einer elektrisch betätigbaren Drosselklappe (sogenanntes E-Gas) oder einer elektronischen Diesel-Regelung (ETC) vorgesehen.

**Patentansprüche**

1. Verfahren zur Steuerung des Abtriebsmoments (Mab) eines automatischen Schaltgetriebes (10) während des Ablaufs eines Schaltvorgangs in einem motorgetriebenen Fahrzeug mit einem Schaltgetriebe (10), das wenigstens zwei über Kupplungen (16, 17) alternativ einlegbare Getriebegänge (11, 12) aufweist, wobei zur Steuerung des Abtriebsmoments (Mab) die Kupplungen (16, 17) und das Moment ($M_m$) des Fahrzeugmotors (14) gemäß wenigstens zweier abhängig von momentan vorliegenden Schaltbedingungen auswählbaren Steuerungsabläufe (SH1-SH3, SR1-SR3 oder ZH, ZR) gesteuert werden und zur Auswahl der Steuerungsabläufe (SH1-SH3, SR1-SR3 oder ZH, ZR) als Schaltbedingung ermittelt wird, ob sich das Fahrzeug in einem Betriebszustand mit einem positiven Kupplungsmoment (Motorzugbetrieb) oder in einem Betriebszustand mit einem negativen Kupplungsmoment (Motorschiebebetrieb) befindet, dadurch gekennzeichnet, daß im Falle des Vorliegens des Betriebszustands mit negativem Kupplungsmoment (Motorschiebebetrieb) als zusätzliche Schaltbedingung ermittelt wird, ob ein nach Beendigung des Schaltvorgangs gewünschtes Motormoment ($M_{m\,soll}$) größer ist als das minimal aufzubringende Motormoment ($M_{m\,min}$), und abhängig von dieser zusätzlichen Schaltbedingung die Steuerungsabläufe (SH1-SH3, SR1-SR3 oder ZH, ZR) gewählt werden.

2. Verfahren zur Steuerung des Abtriebsmoments (Mab) eines automatischen Schaltgetriebes (10) während des Ablaufs eines Schaltvorgangs in einem motorgetriebenen Fahrzeug mit einem Schaltgetriebe (10), das wenigstens zwei über Kupplungen (16, 17) alternativ einlegbare Getriebegänge (11, 12) aufweist, wobei zur Steuerung des Abtriebsmoments (Mab) die Kupplungen (16, 17) und das Moment ($M_m$) des Fahrzeugmotors (14) gemäß wenigstens zweier abhängig von momentan vorliegenden Schaltbedingungen auswählbaren Steuerungsabläufe (SH1-SH3, SR1-SR3 oder ZH, ZR) gesteuert werden und zur Auswahl der Steuerungsabläufe (SH1-SH3, SR1-SR3 oder ZH, ZR) als Schaltbedingung ermittelt wird, ob sich das Fahrzeug in einem Betriebszustand mit einem positiven Kupplungsmoment (Motorzugbetrieb) oder in einem Betriebszustand mit einem negativen Kupplungsmoment (Motorschiebebetrieb) befindet, dadurch gekennzeichnet, daß als zusätzliches weiteres Schaltkriterium ermittelt wird, ob bei Beginn des Schaltvorgangs das momentane Motormoment ($M_{m\,ist}$) größer ist als das minimal aufzubringende Motormoment ($M_{m\,min}$), und abhängig von dieser zusätzlichen Schaltbedingung die Steuerungsabläufe (SH1-SH3, SR1-SR3 oder ZH, ZR) gewählt werden.

3. Verfahren nach Anspruch 1 oder 2, dadurch gekennzeichnet, daß das nach Beendigung des Schaltvorgangs gewünschte Motormoment ($M_{m\,soll}$) durch ein vom Fahrer des Fahrzeugs betätigbares Fahrpedal (19) am Anfang des Schaltvorgangs vorgegeben wird.

4. Verfahren nach einem der vorhergehenden Ansprüche, dadurch gekennzeichnet, daß als weitere Schaltbedingung ermittelt wird, ob es sich bei dem zu steuernden Schaltvorgang um einen Hochschaltvorgang von einer ersten Getriebeübersetzung ($u_1$) zu einer zweiten Getriebeübersetzung ($u_2$) oder um einen Rückschaltvorgang von einer zweiten Getriebeübersetzung ($u_2$) zu einer ersten Getriebeübersetzung ($u_1$) handelt.

5. Verfahren nach Anspruch 1, dadurch gekennzeichnet, daß als zusätzliches weiteres Schaltkriterium ermittelt wird, ob bei Beginn des Schaltvorgangs das momentane Motormoment ($M_{m\,ist}$) größer ist als das minimal aufzubringende Motormoment ($M_{m\,min}$), und abhängig von dieser zusätzlichen Schaltbedingung die Steuerungsabläufe (SH1-SH3, SR1-SR3 oder ZH, ZR) gewählt werden.

6. Verfahren nach einem der vorhergehenden Ansprüche, dadurch gekennzeichnet, daß

- ein erster Steuerungsablauf (SH1) gewählt wird, falls

    - ein Hochschaltvorgang von einer ersten Getriebeübersetzung ($u_1$) zu einer zweiten Getriebeübersetzung ($u_2$) erkannt wird und
    - das nach Beendigung des Schaltvorgangs gewünschte Motormoment ($M_{m\,soll}$) größer als das minimal aufzubringende Motormoment ($M_{m\,min}$) oder gleich dem minimal aufzubringenden Motormoment ($M_{m\,min}$) ist, und/oder

- ein zweiter Steuerungsablauf (SH2, SH3) gewählt wird, falls

    - ein Hochschaltvorgang von einer ersten Getriebeübersetzung ($u_1$) zu einer zweiten Getriebeübersetzung ($u_2$) erkannt wird und
    - das nach Beendigung des Schaltvorgangs gewünschte Motormoment ($M_{m\,soll}$) kleiner als das minimal aufzubringende Motormoment ($M_{m\,min}$) ist, und/oder

- ein dritter Steuerungsablauf (SR3) gewählt wird, falls

    - ein Rückschaltvorgang von einer zweiten Getriebeübersetzung ($u_2$) zu einer ersten Getriebeübersetzung ($u_1$) erkannt wird und
    - das bei Beginn des Schaltvorgangs vorliegende Motormoment ($M_{m\,ist}$) gleich dem minimal aufzubringenden Motormoment ($M_{m\,min}$) ist und
    - das nach Beendigung des Schaltvorgangs gewünschte Motormoment ($M_{m\,soll}$) kleiner als das minimal aufzubringende Motormoment ($M_{m\,min}$) ist, und/oder

- ein vierter Steuerungsablauf (SR2) gewählt wird, falls

    - ein Rückschaltvorgang von einer zweiten Getriebeübersetzung ($u_2$) zu einer ersten Getriebeübersetzung ($u_1$) erkannt wird und
    - das bei Beginn des Schaltvorgangs vorliegende Motormoment ($M_{m\,ist}$) gleich dem minimal aufzubringenden Motormoment ($M_{m\,min}$) ist und
    - das nach Beendigung des Schaltvorgangs gewünschte Motormoment ($M_{m\,soll}$) größer als das minimal aufzubringende Motormoment ($M_{m\,min}$) ist, und/oder

- ein fünfter Steuerungsablauf (SR1) gewählt wird, falls

  - ein Rückschaltvorgang von einer zweiten Getriebeübersetzung ($u_2$) zu einer ersten Getriebeübersetzung ($u_1$) erkannt wird und
  - das bei Beginn des Schaltvorgangs vorliegende Motormoment ($M_{m\ ist}$) größer als das minimal aufzubringende Motormoment ($M_{m\ min}$) ist.

7. Verfahren nach Anspruch 6, dadurch gekennzeichnet, daß der erste Steuerungsablauf (SH1) folgende Schritte beinhaltet:

   - Lösen der ersten Kupplung (16) bis die Motordrehzahl ($n_m$) im wesentlichen die Synchrondrehzahl ($n_2$) der zweiten Kupplung (17) erreicht hat,
   - im wesentlichen gleichzeitiges Reduzieren des Motormoments ($M_m$) um einen Wert (deltaM$_m$), der im wesentlichen proportional zur Differenz ($n_m$-$n_2$) zwischen der aktuellen Motordrehzahl ($n_m$) und der Synchrondrehzahl ($n_2$) der zweiten Kupplung (17) ist,
   - Schließen der zweiten Kupplung (17) bis zu ihrem schlupffreien Zustand, sobald die Motordrehzahl ($n_m$) die Synchrondrehzahl ($n_2$) der zweiten Kupplung (17) im wesentlichen erreicht hat,
   - anschließendes weiteres zeitgesteuertes Lösen der ersten Kupplung (16) bis zum vollständigen Lösen der ersten Kupplung (16)
   - im wesentlichen gleichzeitiges zeitgesteuertes Reduzieren des Motormoments (Mmot) auf einen Wert, der im wesentlichen dem vom Fahrer vorgegebenen Getriebeausgangsmomentsollwert ($M_{ab\ soll}$) dividiert durch die Übersetzung ($u_2$) des höheren Getriebegangs (12) entspricht.

8. Verfahren nach Anspruch 6, dadurch gekennzeichnet, daß der zweite Steuerungsablauf (SH2) folgende Schritte beinhaltet:

   - zeitgesteuertes Lösen der ersten Kupplung (16),
   - im wesentlichen gleichzeitiges Reduzieren des Motormoments ($M_m$) abhängig von einem Wert (deltaM$_m$), der die Differenz ($n_m$-$n_2$) zwischen der aktuellen Motordrehzahl ($n_m$) und der Synchrondrehzahl ($n_2$) der zweiten Kupplung (17) repräsentiert, und abhängig von dem zeitgesteuerten Lösen der ersten Kupplung (16),
   - Schließen der zweiten Kupplung (17) bis zu ihrem schlupffreien Zustand, sobald die Motordrehzahl ($n_m$) die Synchrondrehzahl ($n_2$) der zweiten Kupplung (17) im wesentlichen erreicht hat,
   - anschließendes weiteres zeitgesteuertes Lösen der ersten Kupplung (16) bis zum vollständigen Lösen der ersten Kupplung (16)
   - im wesentlichen gleichzeitiges zeitgesteuertes Reduzieren des Motormoments (Mmot) auf einen Wert, der im wesentlichen dem vom Fahrer vorgegebenen Getriebeausgangsmomentsollwert ($M_{ab\ soll}$) dividiert durch die Übersetzung ($u_2$) des höheren Getriebegangs

   (12) entspricht, oder daß der zweite Steuerungsablauf (SH3) folgende Schritte beinhaltet:

   - zeitgesteuertes Lösen der ersten Kupplung (16),
   - im wesentlichen gleichzeitiges zeitgesteuertes Reduzieren des Motormoments ($M_m$) auf seinen minimalen Wert ($M_{m\ min}$),
   - Lösen der ersten Kupplung (16), wenn die aktuelle Motordrehzahl ($N_m$) im wesentlichen die Synchrondrehzahl ($n_2$) der zweiten Kupplung (17) erreicht hat,
   - im wesentlichen gleichzeitiges Schließen der zweiten Kupplung (17).

9. Verfahren nach Anspruch 6, dadurch gekennzeichnet, daß der fünfte Steuerungsablauf (SR1) folgende Schritte beinhaltet:

   - zeitgesteuertes Schließen der ersten Kupplung (16) bis das gesamte Motormoment durch die erste Kupplung (16) übertragen wird, wobei die erste Kupplung (16) mit einem Schlupf arbeitet, der in etwa der Differenz ($n_1$-$n_2$) der Synchrondrehzahlen der ersten und zweiten Kupplung entspricht,
   - im wesentlichen gleichzeitiges zeitgesteuertes Lösen der zweiten Kupplung (17), wobei die zweite Kupplung (17) ohne Schlupf arbeitet,
   - im wesentlichen gleichzeitiges zeitgesteuertes Erhöhen des Motormoments ($M_m$),
   - anschließendes vollständiges Lösen der zweiten Kupplung (17) sobald das gesamte Moment im wesentlichen durch die erste Kupplung (16) übertragen wird und

- anschließende Erhöhung des Motormoments ($M_m$) um einen Wert (delta$M_m$), der im wesentlichen proportional zur Differenz ($n_1$-$n_m$) zwischen der Synchrondrehzahl ($n_1$) der ersten Kupplung (16) und der aktuellen Motordrehzahl ($n_m$) ist.

10. Verfahren nach Anspruch 6, dadurch gekennzeichnet, daß der vierte Steuerungsablauf (SR2) folgende Schritte beinhaltet:

- zeitgesteuertes Schließen der ersten Kupplung (16) bis das gesamte Motormoment durch die erste Kupplung (16) übertragen wird, wobei die erste Kupplung (16) mit einem Schlupf arbeitet, der in etwa der Differenz ($n_1$-$n_2$) der Synchrondrehzahlen der ersten und zweiten Kupplung entspricht,
- im wesentlichen gleichzeitiges zeitgesteuertes Lösen der zweiten Kupplung (17), wobei die zweite Kupplung (17) ohne Schlupf arbeitet,
- im wesentlichen gleichzeitiges zeitgesteuertes Erhöhen des Motormoments ($M_m$) beginnend mit dem minimal aufzubringenden Motormoment ($M_{m\ min}$),
- anschleißendes vollständiges Lösen der zweiten Kupplung (17) sobald das gesamte Moment im wesentlichen durch die erste Kupplung (16) übertragen wird.
- anschließende Erhöhung des Motormoments ($M_m$) um einen Wert (delta$M_m$), der im wesentlichen proportional zur Differenz ($n_1$-$n_m$) zwischen der Synchrondrehzahl ($n_1$) der ersten Kupplung (16) und der aktuellen Motordrehzahl ($n_m$) ist.

11. Verfahren nach Anspruch 6, dadurch gekennzeichnet, daß der dritte Steuerungsablauf (SR3) folgende Schritte beinhaltet:

- zeitgesteuertes Schließen der ersten Kupplung (16) bis das gesamte Motormoment durch die erste Kupplung (16) übertragen wird, wobei die erste Kupplung (16) mit einem Schlupf arbeitet, der in etwa der Differenz ($n_1$-$n_2$) der Synchrondrehzahlen der ersten und zweiten Kupplung entspricht,
- im wesentlichen gleichzeitiges zeitgesteuertes Lösen der zweiten Kupplung (17), wobei die zweite Kupplung (17) ohne Schlupf arbeitet,
- anschließende Erhöhung des Motormoments ($M_m$) um einen Wert (delta$M_m$), der im wesentlichen von der Differenz ($n_1$-$n_m$) zwischen der Synchrondrehzahl ($n_1$) der ersten Kupplung (16) und der aktuellen Motordrehzahl ($n_m$) abhängig ist.

12. Verfahren nach Anspruch 1 oder 2, dadurch gekennzeichnet, daß zur Ermittlung, ob sich das Fahrzeug in einem Betriebszustand mit einem positiven Kupplungsmoment (Motorzugbetrieb) oder in einem Betriebszustand mit einem negativen Kupplungsmoment (Motorschiebebetrieb) befindet,

- ein indiziertes Ist-Motormoment (movist) aus der Motordrehzahl ($n_m$) und der Motorlast unter Berücksichtigung des Zündwinkels und gegebenfalls vorliegender Zylinderausblendungen abgeschätzt wird, und
- ein Motorschleppmoment (mo_schlepp) aus der Motorlast, der Motordrehzahl ($n_m$) und/oder der Motortemperatur abgeschätzt wird, und
- der gesamte Momentenverlust (mo_verl) aus dem abgeschätzten Motorschleppmoment (mo_schlepp) und dem Momentenbedarf (mo_na) der Nebenaggregate (z.B. Klima-Anlage) ermittelt wird, und
- das Ist-Kupplungsmoment (mo_kup_ist) als Differenz zwischen dem indizierten Ist-Motormoment (movist) und dem gesamten Momentenverlust (mo_verl) ermittelt wird.

13. Verfahren nach Anspruch 1 oder 2, dadurch gekennzeichnet, daß zur Ermittlung, ob sich das Fahrzeug in einem Betriebszustand mit einem positiven Kupplungsmoment (Motorzugbetrieb) oder in einem Betriebszustand mit einem negativen Kupplungsmoment (Motorschiebebetrieb) befindet, die Signale eines an der Antriebswelle des Fahrzeugs angebrachten Drehmomentsensors herangezogen werden.

14. Vorrichtung zur Steuerung des Abtriebsmoments (Mab) eines automatischen Schaltgetriebes (10) während des Ablaufs eines Schaltvorgangs in einem motorgetriebenen Fahrzeug mit einem Schaltgetriebe (10), das wenigstens zwei über Kupplungen (16, 17) alternativ einlegbare Getriebegänge (11, 12) aufweist, wobei zur Steuerung des Abtriebsmoments (Mab) Mittel (18, 20, 21, 22) vorgesehen sind, mittels der die Kupplungen (16, 17) und das Moment ($M_m$) des Fahrzeugmotors (14) gemäß wenigstens zweier abhängig von momentan vorliegenden Schaltbedingungen auswählbaren Steuerungsabläufe (SH1-SH3, SR1-SR3 oder ZH, ZR) gesteuert werden und zur Auswahl der Steuerungsabläufe (SH1-SH3, SR1-SR3 oder ZH, ZR) als Schaltbedingung ermittelt wird, ob sich das Fahrzeug in einem Betriebszustand mit einem positiven Kupplungsmoment (Motorzugbetrieb) oder in einem Betriebszustand mit einem negativen Kupplungsmoment (Motorschiebebetrieb) befindet, dadurch gekennzeichnet, daß im Falle des Vorliegens des Betriebszustands mit negativem Kupplungsmoment (Motorschiebebetrieb) als zusätzliche Schaltbedingung ermittelt wird, ob ein nach Beendigung des Schaltvorgangs gewünschtes Motormoment ($M_{m\ soll}$) größer ist als das minimal aufzubringende Motormoment ($M_{m\ min}$), und abhängig von dieser zusätzlichen Schaltbedingung die Steuerungsabläufe (SH1-SH3, SR1-SR3 oder ZH, ZR) gewählt werden.

15. Vorrichtung zur Steuerung des Abtriebsmoments (Mab) eines automatischen Schaltgetriebes (10) während des Ablaufs eines Schaltvorgangs in einem motorgetriebenen Fahrzeug mit einem Schaltgetriebe (10), das wenigstens zwei über Kupplungen (16, 17) alternativ einlegbare Getriebegänge (11, 12) aufweist, wobei zur Steuerung des Abtriebsmoments (Mab) Mittel (18, 20, 21, 22) vorgesehen sind, mittels der die Kupplungen (16, 17) und das Moment ($M_m$) des Fahrzeugmotors (14) gemäß wenigstens zweier abhängig von momentan vorliegenden Schaltbedingungen auswählbaren Steuerungsabläufe (SH1-SH3, SR1-SR3 oder ZH, ZR) gesteuert werden und zur Auswahl der Steuerungsabläufe (SH1-SH3, SR1-SR3 oder ZH, ZR) als Schaltbedingung ermittelt wird, ob sich das Fahrzeug in einem Betriebszustand mit einem positiven Kupplungsmoment (Motorzugbetrieb) oder in einem Betriebszustand mit einem negativen Kupplungsmoment (Motorschiebebetrieb) befindet, dadurch gekennzeichnet, daß als zusätzliches weiteres Schaltkriterium ermittelt wird, ob bei Beginn des Schaltvorgangs das momentane Motormoment ($M_{m\ ist}$) größer ist als das minimal aufzubringende Motormoment ($M_{m\ min}$), und abhängig von dieser zusätzlichen Schaltbedingung die Steuerungsabläufe (SH1-SH3, SR1-SR3 oder ZH, ZR) gewählt werden.

## Claims

1. Method for controlling the output torque (Mab) of an automatic gearbox (10) during the course of a gear-changing process in an engine-operated vehicle with a change speed gear (10) which has at least two gears (11, 12) which can be engaged alternatively by means of at least two clutches (16, 17), the clutches (16, 17) and the torque ($M_m$) of the vehicle engine (14) being controlled, for the purpose of controlling the output torque (Mab), according to at least two control sequences (SH1-SH3, SR1-SR3 or ZH, ZR) which can be selected as a function of instantaneously present gear-changing conditions, and, in order to select the control sequences (SH1-SH3, SR1-SR3 or ZH, ZR), it is determined as a gear-changing condition whether the vehicle is in an operating state with a positive clutch torque (engine traction conditions) or in an operating state with a negative clutch torque (engine overrun conditions), characterized in that in the case of the presence of the operating state with negative clutch torque (engine overrun conditions), it is determined as an additional gear-changing condition whether an engine torque ($M_{m\ des}$) which is desired after the termination of the gear-changing process is greater than the minimum engine torque ($M_{n\ min}$) to be applied, and the control sequences (SH1-SH3, SR1-SR3 or ZH, ZR) are selected as a function of this additional gear-changing condition.

2. Method for controlling the output torque (Mab) of an automatic gearbox (10) during the course of a gear-changing process in an engine-operated vehicle with a change speed gear (10) which has at least two gears (11, 12) which can be engaged alternatively by means of at least two clutches (16, 17), the clutches (16, 17) and the torque ($M_m$) of the vehicle engine (14) being controlled, for the purpose of controlling the output torque (Mab), according to at least two control sequences (SH1-SH3, SR1-SR3 or ZH, ZR) which can be selected as a function of instantaneously present gear-changing conditions, and, in order to select the control sequences (SH1-SH3, SR1-SR3 or ZH, ZR), it is determined as a gear-changing condition whether the vehicle is in an operating state with a positive clutch torque (engine traction conditions) or in an operating state with a negative clutch torque (engine overrun conditions), characterized in that it is determined, as an additional further gear-changing criterion, whether the instantaneous engine torque ($M_{min\ act}$) is greater at the start of the gear-changing process than the minimum engine torque ($M_{m\ min}$) to be applied and the control sequences (SH1-SH3, SR1-SR3 or ZH, ZR) are selected as a function of this additional gear-changing condition.

3. Method according to Claim 1 or 2, characterized in that the engine torque ($M_{m\ des}$) desired after the termination of the gear-changing process is prescribed at the start of the gear-changing process by an accelerator pedal (19) which can be actuated by the driver of the vehicle.

4. Method according to one of the preceding claims, characterized in that it is determined, as a further gear-changing condition, whether the gear-changing process to be controlled is a changing-up process from a first gear transmission ratio ($u_1$) to a second gear transmission ratio ($u_2$) or a changing-down process from a second gear transmission ratio ($u_2$) to a first gear transmission ratio ($u_1$).

5. Method according to Claim 1, characterized in that it is determined, as an additional further gear-changing criterion, whether the instantaneous engine torque ($M_{min\ act}$) is greater at the start of the gear-changing process than the minimum engine torque ($M_{m\ min}$) to be applied and the control sequences (SH1-SH3, SR1-SR3 or ZH, ZR) are selected as a function of this additional gear-changing condition.

6. Method according to one of the preceding claims, characterized in that,

- a first control sequence (SH1) is selected if

  - a changing-up process from a first gear transmission ratio ($u_1$) to a second gear transmission ratio ($u_2$) is detected and
  - the engine torque ($M_{m\ des}$) desired after the termination of the gear-changing process is greater than the minimum engine torque ($M_{m\ min}$) to be applied or equal to the minimum engine torque

    ($M_{m\ min}$) to be applied, and/or
- a second control sequence (SH2, SH3) is selected if

  - a changing-up process from a first gear transmission ratio ($U_1$) to a second gear transmission ratio ($U_2$) is detected and
  - the engine torque ($M_{m\ des}$) desired after the termination of the gear-changing process is smaller than the minimum engine torque ($M_{m\ min}$) to be applied, and/or

- a third control sequence (SR3) is selected if

  - a changing-down process from a second gear transmission ratio ($u_2$) to a first gear transmission ratio ($u_1$) is detected and
  - the engine torque ($M_{m\ act}$) present at the start of the gear-changing process is equal to the minimum engine torque ($M_{m\ min}$) to be applied and
  - the engine torque ($M_{m\ des}$) desired after the termination of the gear-changing process is smaller than the minimum engine torque ($M_{m\ min}$) to be applied, and/or

- a fourth control sequence (SR2) is selected if

  - a changing-down process from a second gear transmission ratio ($u_2$) to a first gear transmission ratio ($u_1$) is detected
    and
  - the engine torque ($M_{m\ act}$) which is present at the start of the gear-changing process is equal to the minimum engine torque ($M_{m\ min}$) to be applied and
  - the engine torque ($M_{m\ des}$) desired after the termination of the gear-changing process is greater than the minimum engine torque ($M_{m\ min}$) to be applied, and/or

- a fifth control sequence (SR1) is selected if

  - a changing-down process from a second gear transmission ratio ($u_2$) to a first gear transmission ratio ($u_1$) is detected
    and
  - the engine torque ($M_{m\ act}$) present at the start of the gear-changing process is greater than the minimum engine torque ($M_{m\ min}$) to be applied.

7. Method according to Claim 6, characterized in that the first control sequence (SH1) contains the following steps:

- the first clutch (16) is released until the engine speed ($n_m$) has essentially reached the synchronous speed ($n_2$) of the second clutch (17).
- the engine torque ($M_m$) is essentially reduced simultaneously by a value ($deltaM_m$) which is essentially proportional to the difference ($n_m$-$n_2$) between the instantaneous engine speed ($n_m$) and the synchronous speed ($n_2$) of the second clutch (17),
- the second clutch (17) is closed up to its slip-free state as soon as the engine speed ($n_m$) has essentially reached the synchronous speed ($n_2$) of the second clutch (17),
- the first clutch (16) is subsequently released again with controlled timing up until the complete release of the first clutch (16)

- the engine torque (Mmot) is simultaneously reduced with controlled timing essentially to a value which essentially corresponds to the desired value ($M_{ab\ des}$) of the gear output torque prescribed by the driver divided by the transmission ratio ($u_2$) of the higher gear (12).

8. Method according to Claim 6, characterized in that the second control sequence (SH2) contains the following steps:

- the first clutch (16) is released with controlled timing,
- the engine torque ($M_n$) is reduced essentially simultaneously as a function of a value (delta$M_m$) which represents the difference ($n_m$-$n_2$) between the instantaneous engine speed ($n_m$) and the synchronous speed ($n_2$) of the second clutch (17), and as a function of the time-controlled release of the first clutch (16),
- the second clutch (17) is closed up to its slip-free state as soon as the engine speed ($n_m$) has essentially reached the synchronous speed ($n_2$) of the second clutch (17),
- the first clutch (16) is subsequently released again with controlled timing until the first clutch (16) is completely released
- the engine torque (Mmot) is reduced essentially simultaneously with controlled timing to a value which corresponds essentially to the desired value ($M_{ab\ des}$) for the gear output torque prescribed by the driver divided by the transmission ratio ($u_2$) of the higher gear,

or in that the second control sequence (SH3) contains the following steps:

- the first clutch (16) is released with controlled timing,
- the engine torque ($M_m$) is reduced essentially simultaneously with controlled timing to its minimum value ($M_{m\ min}$),
- the first clutch (16) is released when the instantaneous engine speed ($N_m$) has essentially reached the synchronous speed ($n_2$) of the second clutch (17),
- the second clutch (17) is closed essentially simultaneously.

9. Method according to Claim 6, characterized in that the fifth control sequence (SR1) contains the following steps:

- the first clutch (16) is closed with controlled timing until the entire engine torque is transmitted by the first clutch (16), the first clutch (16) operating with a slip which corresponds approximately to the difference ($n_1$-$n_2$) of the synchronous speeds of the first and of the second clutch,
- the second clutch (17) is released essentially simultaneously with controlled timing, the first clutch (17) operating without slip,
- the engine torque ($M_m$) is increased essentially simultaneously with controlled timing,
- the second clutch (17) is subsequently released completely as soon as the entire torque is transmitted essentially by the first clutch (16) and
- the engine torque ($M_m$) is subsequently increased by a value (delta$M_m$) which is essentially proportional to the difference ($n_1$-$n_m$) between the synchronous speed ($n_1$) of the first clutch (16) and the instantaneous engine speed ($n_m$).

10. Method according to Claim 6, characterized in that the fourth control sequence (SR2) contains the following steps:

- the first clutch (16) is closed with controlled timing until the entire engine torque is transmitted by the first clutch (16), the first clutch (16) operating with a slip which corresponds approximately to the difference ($n_1$-$n_2$) of the synchronous speeds of the first and second clutches,

  - the second clutch (17) is released essentially simultaneously with controlled timing, the second clutch (17) operating without slip,

- the engine torque ($M_m$) is increased essentially simultaneously with controlled timing starting at the minimum engine torque ($M_{m\ min}$) to be applied,
- the second clutch (17) is subsequently released completely as soon as the entire torque is essentially transmitted by the first clutch (16),
- the engine torque ($M_m$) is subsequently increased by a value (delta$M_m$) which is essentially proportional to the difference ($n_1$-$n_m$) between the synchronous speed ($n_1$) of the first clutch (16) and the instantaneous engine speed ($n_m$).

**EP 0 670 789 B1**

**11.** Method according to Claim 6, characterized in that the third control sequence (SR3) contains the following steps:

- the first clutch (16) is closed with control timing until the entire engine torque is transmitted by the first clutch (16) operating with a slip which corresponds approximately to the difference ($n_1$-$n_2$) of the synchronous speeds of the first and second clutches,
- the second clutch (17) is released essentially simultaneously with controlled timing, the second clutch (17) operating without slip,
- the engine torque ($M_m$) is subsequently increased by a value (deltaM$_m$) which is essentially dependent on the difference ($n_1$-$n_m$) between the synchronous speed ($n_1$) of the first clutch (16) and the instantaneous engine speed ($n_m$).

**12.** Method according to Claim 1, characterized in that, in order to determine whether the vehicle is in an operating state with a positive clutch torque (engine traction conditions) or in an operating state with a negative clutch torque (engine overrun conditions),

- an indexed actual engine torque (movact) is estimated from the engine speed ($n_m$) and the engine load taking into account the ignition angle and cylinder shut-offs which may be present, and
- an engine drag torque (mo_schlepp) is estimated from the engine load, the engine speed ($n_m$) and/or the engine temperature, and
- the entire torque loss (mo_verl) is determined from the estimated engine drag torque (mo_schlepp) and the torque requirement (mo_na) of the auxiliary units (e.g. air conditioning system), and
- the actual clutch torque (mo_kup_act) is determined as the difference between the indexed actual engine torque (movact) and the entire torque loss (mo_verl).

**13.** Method according to Claim 1 or 2, characterized in that the signals of a torque sensor which is attached to the driveshaft of the vehicle are used to determine whether the vehicle is in an operating state with a positive clutch torque (engine overrun conditions) or in an operating state with a negative clutch torque (engine overrun conditions).

**14.** Device for controlling the output torque (Mab) of an automatic gearbox (10) during the course of a gear-changing process in an engine-operated vehicle with a gearbox (10) which has at least two gears (11, 12) which can be engaged alternatively by means of clutches (16, 17), means (18, 20, 21, 22) being provided for controlling the output torque (Mab) by which means (18, 20, 21, 22) the clutches (16, 17) and the torque ($M_m$) of the vehicle engine (14) are controlled according to at least two control sequences (SH1-SH3, SR1-SR3 or ZH, ZR) which can be selected as a function of the instantaneously present gear-changing conditions, and, in order to select the control sequences (SH1-SH3, SR1-SR3 or ZH, ZR) it is determined, as a gear-changing condition, whether the vehicle is in an operating state with a positive clutch torque (engine traction conditions) or in an operating state with a negative clutch torque (engine overrun conditions), characterized in that in the case of the presence of the operating state with negative clutch torque (engine overrun conditions), it is determined as an additional gear-changing condition whether an engine torque ($M_{m\ des}$) which is desired after the termination of the gear-changing process is greater than the minimum engine torque ($M_{n\ min}$) to be applied, and the control sequences (SH1-SH3, SR1-SR3 or ZH, ZR) are selected as a function of this additional gear-changing condition.

**15.** Device for controlling the output torque (Mab) of an automatic gearbox (10) during the course of a gear-changing process in an engine-operated vehicle with a gearbox (10) which has at least two gears (11, 12) which can be engaged alternatively by means of clutches (16, 17), means (18, 20, 21, 22) being provided for controlling the output torque (Mab) by which means (18, 20, 21, 22) the clutches (16, 17) and the torque ($M_m$) of the vehicle engine (14) are controlled according to at least two control sequences (SH1-SH3, SR1-SR3 or ZH, ZR) which can be selected as a function of the instantaneously present gear-changing conditions, and, in order to select the control sequences (SH1-SH3, SR1-SR3 or ZH, ZR) it is determined, as a gear-changing condition, whether the vehicle is in an operating state with a positive clutch torque (engine traction conditions) or in an operating state with a negative clutch torque (engine overrun conditions), characterized in that it is determined, as an additional further gear-changing criterion, whether the instantaneous engine torque ($M_{min\ act}$) is greater at the start of the gear-changing process than the minimum engine torque ($M_{m\ min}$) to be applied and the control sequences (SH1-SH3, SR1-SR3 or ZH, ZR) are selected as a function of this additional gear-changing condition.

**Revendications**

**1.** Procédé de commande du couple de sortie (Mab) d'une boîte de vitesses automatique (10) pendant l'exécution

16

d'une commutation dans un véhicule entraîné par un moteur équipé d'une boîte de vitesses (10), ayant au moins deux lignes de transmission (11, 12) qui sont mises en oeuvre en alternance par l'intermédiaire d'embrayages (16, 17), la commande du couple de sortie (Mab) se faisant par la commande des embrayages (16, 17) et du couple ($M_m$) du moteur (14) du véhicule selon au moins deux opérations de commande (SH1-SH3, SR1-SR3 ou ZH, ZR) dépendant des conditions de commutation instantanées, et comme condition de commutation pour sélectionner les opérations de commande (SH1-SH3, SR1-SR3 ou ZH, ZR), on détermine si le véhicule se trouve dans un état de fonctionnement avec couple d'embrayage positif (mode d'entraînement par le moteur) ou un état de fonctionnement avec couple d'embrayage négatif (mode de frein moteur), caractérisé en ce qu'

en cas de mode de fonctionnement avec couple d'embrayage négatif (mode de frein moteur), on détermine comme condition de commutation supplémentaire si un couple moteur souhaité à la fin de l'opération de commutation ($M_m$ cons) est supérieur au couple moteur minimum à fournir ($M_{m\ min}$) et en fonction de cette condition de commutation supplémentaire, on choisit les opérations de commande (SH1-SH3, SR1-SR3 ou ZH, ZR).

2. Procédé de commande du couple de sortie (Mab) d'une boîte de vitesses automatique (10) pendant l'exécution d'une opération de commutation dans un véhicule entraîné par un moteur, équipé d'une boîte de vitesses (10) ayant au moins deux lignes de transmission (11, 12) utilisables en alternance par au moins deux embrayages (16, 17), et pour commander le couple de sortie (Mab), on commande les embrayages (16, 17) et le couple ($M_m$) du moteur (14) du véhicule selon au moins deux opérations de commande (SH1-SH3, SR1-SR3 ou ZH, ZR), sélectionné en fonction des conditions de commutation instantanées, et pour choisir les opérations de commande (SH1-SH3, SR1-SR3 ou ZH, ZR) on détermine comme condition de commutation, si le véhicule est dans un état de fonctionnement avec un couple d'embrayage positif (mode d'entraînement par le moteur) dans un état de fonctionnement à couple d'embrayage négatif (mode de frein moteur), caractérisé en ce que

comme autre critère de commutation on détermine si au début de l'opération de commutation, le couple moteur instantané ($M_{m\ réel}$) est supérieur au couple moteur minimum à fournir ($M_{m\ min}$) et en fonction de cette condition de commutation supplémentaire, on choisit l'opération de commande (SH1-SH3, SR1-SR3 ou ZH, ZR).

3. Procédé selon la revendication 1 ou 2,
caractérisé en ce que
le couple moteur souhaité ($M_{m\ cons}$) après la fin de l'opération de commutation est prédéterminé au début de l'opération de commutation par la pédale d'accélérateur (19) actionnée par le conducteur du véhicule.

4. Procédé selon l'une quelconque des revendications précédentes,
caractérisé en ce que
comme autre condition de commutation, on détermine si l'opération de commutation a commander est un passage d'une vitesse supérieure à partir d'un premier rapport de transmission ($u_1$) vers un second rapport de transmission ($u_2$) ou s'il s'agit de rétrograder de vitesse en passant d'un second rapport de transmission ($u_2$) à un premier rapport de transmission ($u_1$).

5. Procédé selon la revendication 1,
caractérisé en ce que
comme autre critère de commutation on détermine si au début de la commutation, le couple moteur instantané ($M_m$ réel) est supérieur au couple moteur minimum à fournir ($M_{m\ min}$) et en fonction de cette condition de commutation, supplémentaire, on choisit l'opération de commande (SH1-SH3, SR1-SR3 ou ZH, ZR).

6. Procédé selon l'une quelconque des revendications précédentes,
caractérisé en ce que

- de choisir une première opération de commande (SH1) dans le cas où
- on détecte une commutation vers la vitesse supérieure à partir d'un premier rapport de transmission (u1) vers un second rapport de transmission (u2)et,
- le couple moteur ($M_{m\ cons}$) souhaité après la fin de la commutation est supérieur au couple moteur minimum à fournir ($M_{m\ min}$) à fournir ou égal à ce couple moteur minimum à fournir ($M_{m\ min}$) et/ou,
- on sélectionne une seconde opération de commande (SH2, SH3) au cas où
- on détecte une commutation à la vitesse supérieure à partir d'un premier rapport de transmission (u1) vers un second rapport de transmission ($u_2$) et,
- le couple moteur ($M_{m\ cons}$) souhaité après la fin de la commutation est inférieur au couple moteur minimum

($M_{m\ min}$) à fournir et/ou,

- on choisit une troisième opération de commande (SR3) au cas où
- on détecte un passage à la vitesse inférieure (rétrograder) à partir d'un second rapport de transmission ($U_2$) vers un premier rapport de transmission ($u_1$) et,
- le couple moteur ($M_{m\ réel}$) au début de la commutation est égal au couple moteur minimum ($M_{m\ min}$) à fournir et,
- le couple moteur ($M_{m\ cons}$) souhaité après la fin de la commutation est inférieur au couple moteur minimum à fournir ($M_{m\ min}$) et/ou,
- on sélectionne une quatrième opération de commande (SR2) au cas où
- on détecte un passage à la vitesse inférieure (rétrograder) à partir d'un second rapport de transmission ($u_2$) vers un premier rapport de transmission ($u_1$) et,
- le couple moteur ($M_{m\ réel}$) appliqué au début de la commutation est égal au couple moteur minimum à fournir ($M_{m\ min}$) et,
- le couple moteur ($M_{m\ cons}$) souhaité après la commutation est supérieur au couple moteur ($M_{m\ min}$) à fournir au minimum et/ou,
- on sélectionne une cinquième opération de commande (SR1) au cas où,
- on détecte une commutation vers une vitesse inférieure (rétrograder) à partir d'un second rapport de transmission ($u_2$) vers un premier rapport de transmission ($u_1$) et,
- le couple moteur ($M_{m\ réel}$) appliqué au début de la commutation est supérieur au couple moteur minimum ($M_{m\ min}$) à fournir.

7.  Procédé selon la revendication 6,
    caractérisé en ce que
    la première opération de commande (SH1) comprend les étapes suivantes :

    - débrayage du première embrayage (16) jusqu'à ce que la vitesse de rotation ($n_m$) du moteur ait essentiellement atteint la vitesse de rotation synchrone ($n_2$) du second embrayage (17),
    - réduction essentiellement simultanée du couple moteur ($M_m$) d'une valeur (delta$M_m$) qui est essentiellement proportionnelle à la différence ($n_m$-$n_2$) entre la vitesse de rotation actuelle ($n_m$) et la vitesse de rotation synchrone ($n_2$) du second embrayage (17),
    - embrayage du second embrayage (17) jusqu'à ce qu'il soit sans patinage, dès que la vitesse de rotation ($n_m$) du moteur ait pratiquement atteint la vitesse de rotation synchrone ($n_2$) du second embrayage (17),
    - puis débrayer le premier embrayage (16) avec une commande dans le temps jusqu'à ce qu'il soit complètement débrayé,
    - réduire essentiellement avec une commande dans le temps simultané le couple moteur ($M_{mot}$) à une valeur qui correspond essentiellement à la valeur de consigne du couple de sortie de transmission ($M_{ab\ cons}$) prédéterminée par le conducteur, divisée par le rapport de démultiplication ($u_2$) de la ligne de transmission supérieure (12).

8.  Procédé selon la revendication 6,
    caractérisé en ce que
    la seconde opération de commande (SH2) comprend les étapes suivantes :

    - débrayage commandé dans le temps du premier embrayage (16),
    - réduction essentiellement simultanée du couple moteur ($M_m$) en fonction d'une valeur (delta$M_m$) représentant la différence ($n_m$-$n_2$) entre la vitesse de rotation actuelle du moteur ($n_m$) et la vitesse de rotation synchrone ($n_2$) du second embrayage (17) ainsi qu'en fonction du desserrage commandé dans le temps du premier embrayage (16),
    - embrayage du second embrayage (17) jusqu'à ce qu'il soit sans patinage dès que la vitesse de rotation ($n_m$) du moteur atteint pratiquement la vitesse de rotation synchrone ($n_2$) du second embrayage (17),
    - puis poursuite du débrayage commandé dans le temps du premier embrayage (16) jusqu'au débrayage complet du premier embrayage (16),
    - réduction du couple moteur ($M_{mot}$), essentiellement de manière simultanée, commandé dans le temps, jusqu'à une valeur correspondant essentiellement à la valeur de consigne du couple de sortie de la transmission ($M_{ab\ cons}$) prédéterminée par le conducteur, valeur divisée par le rapport ($u_2$) de la ligne de transmission supérieure (12), ou en ce que

    la seconde opération de commande (SH3) comprend les étapes suivantes :

- débrayage débrayé dans le temps du premier embrayage (16),
- réduction essentiellement simultanée, commandée dans le temps, du couple moteur ($M_m$) à sa valeur minimale ($M_{m\,min}$),
- débrayage du premier embrayage (16) lorsque la vitesse de rotation actuelle ($n_m$) atteint essentiellement la vitesse de rotation synchrone ($n_2$) du second embrayage (17),
- embrayage pratiquement simultané du second embrayage (17).

9. Procédé selon la revendication 6,
caractérisé en ce que
la cinquième opération de commande (SR1) comprend les étapes suivantes :

- embrayage commandé dans le temps du premier embrayage (16) jusqu'à ce que tout le couple moteur soit transmis par le premier embrayage (16), ce premier embrayage (16) fonctionnant avec du patinage correspondant à la différence ($n_1$-$n_2$) des vitesses de rotation synchrones du premier et du second embrayage,
- débrayage essentiellement simultané, commandé dans le temps du second embrayage (17), cet embrayage (17) fonctionnant sans patinage,
- augmentation essentiellement simultanée, commandée dans le temps du couple moteur ($M_m$),
- puis, débrayage complet du second embrayage (17) dès que tout le couple est transmis essentiellement par le premier embrayage (16), et
- augmentation consécutive du couple moteur ($M_m$) d'une valeur (delta$M_m$) qui est essentiellement proportionnelle à la différence ($n_1$-$n_m$) de la vitesse de rotation synchrone ($n_1$) du premier embrayage (16) et de la vitesse de rotation actuelle ($n_m$) du moteur.

10. Procédé selon la revendication 6,
caractérisé en ce que
la quatrième opération de commande (SR2) comprend les étapes suivantes :

- embrayage commandé dans le temps du premier embrayage (16) jusqu'à ce que tout le couple moteur soit transmis par le premier embrayage (16), le premier embrayage (16) fonctionnant avec du patinage correspondant sensiblement à la différence ($n_1$-$n_2$) des vitesses de rotation synchrones du premier et du second embrayage,
- débrayage essentiellement simultané, commandé dans le temps du second embrayage (17), ce second embrayage (17) fonctionnant sans patinage,
- augmentation essentiellement simultanée commandée dans le temps du couple moteur ($M_m$) en commençant par le couple moteur minimum ($M_{m\,min}$) à fournir,
- puis, débrayage complet du second embrayage (17) dès que tout le couple est transmis essentiellement par le premier embrayage (16),
- puis augmentation du couple moteur ($M_m$) d'une valeur (deltaM) qui est essentiellement proportionnelle à la différence ($n_1$-$n_m$) entre la vitesse de rotation synchrone ($n_1$) du premier embrayage (16) et la vitesse de rotation actuelle ($n_m$) du moteur.

11. Procédé selon la revendication 6,
caractérisé en ce que
la troisième opération de commande (SR3) comprend les étapes suivantes :

- embrayage commandé dans le temps du premier embrayage (16) jusqu'à ce que tout le couple moteur soit transmis par le premier embrayage (16), ce premier embrayage (16) fonctionnant avec un patinage correspondant sensiblement à la différence ($n_1$, $n_2$) des vitesses de rotation synchrones du premier et du second embrayage,
- débrayage essentiellement simultané, commandé dans le temps du second embrayage (17), ce second embrayage (17) fonctionnant sans patinage,
- puis augmentation du couple moteur ($M_m$) d'une valeur (Delta$M_m$) qui dépend essentiellement de la différence ($n_1$-$n_m$) entre la vitesse de rotation synchrone ($n_1$) du premier embrayage (16) et la vitesse de rotation actuelle ($n_m$) du moteur.

12. Procédé selon la revendication 1 ou 2,
caractérisé en ce que
pour déterminer si le véhicule est dans un mode de fonctionnement avec un couple d'embrayage positif (mode d'entraînement par le moteur) ou dans un mode de fonctionnement avec un couple d'embrayage négatif (mode de frein moteur),

- on évalue un couple moteur réel indexé ($mov_{réel}$) à partir de la vitesse de rotation ($n_m$) du moteur et de la charge du moteur en tenant compte de l'angle d'allumage et le cas échéant des cylindres supprimés, et
- on évalue un couple de frein moteur ($mo\_{frein}$) à partir de la charge du moteur, de la vitesse de rotation du moteur ($n_m$) et/ou la température du moteur, et
- on détermine la perte totale de couple ($mo\_{perte}$) à partir du couple de frein moteur ($mo\text{-}_{frein}$) et de la demande de couple ($mo\_na$) des appareils auxiliaires (par exemple installation de climatisation) et,
- on détermine le couple d'embrayage réel ($mo\_kup\_réel$) comme différence entre le couple moteur réel indexé ($mov_{réel}$) et toute la perte de couple ($mo\_{perte}$).

13. Procédé selon la revendication 1 ou 2,
caractérisé en ce que
pour déterminer si le véhicule est dans un mode de fonctionnement avec couple d'embrayage positif (mode d'entraînement par le moteur) ou dans un mode de fonctionnement avec couple d'embrayage négatif (mode de frein moteur) on utilise les signaux d'un capteur de couple monté sur l'arbre d'entraînement du véhicule.

14. Dispositif pour commander le couple de sortie (Mab) d'une boîte de vitesses automatique (10) pendant une commutation dans un véhicule entraîné par un moteur équipé d'une boîte de vitesses (10), ayant au moins deux lignes de transmission (11, 12) mises en oeuvre en alternance par des embrayages (16, 17), la commande du couple de sortie (Mab) étant assurée par des moyens (18, 20, 21, 22) à l'aide desquels les embrayages (16, 17) et le couple ($M_m$) du moteur (14) du véhicule sont commandés selon au moins deux opérations de commande (SH1-SH3, SR1-SR3 ou ZH, ZR), sélectionnées en fonction des conditions de commutation présente et pour sélectionner les opérations de commande (SH1-SH3, SR1-SR3 ou ZH, ZR), on détermine comme condition de commutation si le véhicule est dans un mode de fonctionnement avec un couple d'embrayage positif (mode d'entraînement par le moteur) ou un mode de fonctionnement avec un couple d'embrayage négatif (mode de frein moteur),
caractérisé en ce que
dans le cas du mode de fonctionnement avec un couple d'embrayage négatif (mode de poussée du moteur), on détermine comme condition de commutation supplémentaire si le couple moteur ($M_{m\,cons}$) souhaité après la fin de la commutation est supérieur au couple moteur ($M_{m\,min}$) minimum à fournir et en fonction de cette condition de commutation supplémentaire, on sélectionne les opérations de commande (SH1-SH3, SR1-SR3 ou ZH, ZR).

15. Dispositif de commande du couple de sortie (Mab) d'une boîte de vitesses automatique (10) pendant l'exécution d'une commutation dans un véhicule entraîné par un moteur, équipé d'une boîte de vitesses (10) ayant au moins deux lignes de transmission (11, 12) mises en oeuvre en alternance par l'intermédiaire de deux embrayages (16, 17), et pour la commande du couple de sortie (Mab), des moyens (18, 20, 21, 22) sont prévus, à l'aide desquels on commande les embrayages (16, 17) et le couple ($M_m$) du moteur (14) du véhicule selon au moins deux opérations de commande (SH1-SH3, SR1-SR3 ou ZH, ZR) sélectionnées en fonction des conditions de commutation instantanées et pour sélectionner les opérations de commande (SH1-SH3, SR1-SR3 ou ZH, ZR) on détermine comme condition de commutation si le véhicule est dans un mode de fonctionnement avec couple d'embrayage positif (mode d'entraînement par le moteur) ou dans un mode de fonctionnement à couple d'embrayage négatif (mode de frein moteur),
caractérisé en ce que
comme autre critère complémentaire, on détermine si au début de la commutation, le couple moteur instantané ($M_{m\,réel}$) est supérieur au couple moteur minimum à fournir ($M_{m\,min}$) et en fonction de cette condition de commutation supplémentaire, on sélectionne les opérations de commande (SH1-SH3, SR1-SR3 ou ZH, ZR).

FIG. 1

EP 0 670 789 B1

Start — 201

Schaltvorgang ? — 202
N

Y

Motorzugbetrieb? — 203
Y

N

SH1 – SH3
SR1 – SR3 — 205

204 — ZH
ZR

Ende — 206

FIG. 2

FIG. 3

$M_m$

$M_1$

$M_2$

$p_1$

$p_2$

$p_1$ grenz

$p_2$ grenz

$n_m$

$n_1$

$n_2$

$M_{ab}$

FIG. 4

$t_1$   $t_2$  $t_3$   $t_4$

SH 1

FIG. 5

FIG. 6

FIG. 7

FIG. 8

FIG. 9

SR 3